# EUROPEAN PATENT APPLICATION

(11) **EP 4 808 047 A1**
(43) Date of publication of application: **16.09.2026**
(21) Application number: 26164833.1
(22) Date of filing: 13.03.2026
(51) Int. Cl.: H04L 9/40, H04L 67/303

(54) **ANTI-FINGERPRINTING PRIVACY ENHANCING TECHNOLOGIES FOR ML-AGENTS**

(30) Priority: 14.03.2025 EP 25163898
(71) Applicant: Cloak AD, 9002 Varna (BG)
(72) Inventor: NIKOLOV, Svetoslav Nikolov, 9002 Varna (BG)
(74) Representative: Fleuchaus & Gallo Partnerschaft mbB

(57) **Abstract**

A gateway computer intercepts the communication between a particular client computer (101-c) and a server computer (102) and identifies an attribute statement that the particular client computer (101-c) either actively forwards (REQ_TO_SERVER] to the server computer (102) or that the server computer (102) demands (DEMAND_FOR_[A]). The client computers run machine-learning agents (701-c, 701-k, 701-K). The gateway computer assigns weights in the identified attribute statement according to the contribution of the attributes to abilities of the server computer (102). The first ability relates to the identify the particular machine-learning agent (701-c) from multiple others, and to second ability relates to the provision of a response that fits to a request of the particular machine-learning agent (701-c). Based on the weights, the gateway computer, modifies the attribute statement to a modified attribute statement so that the first ability is being reduced, while the second ability is being maintained.

## Description

### Technical Field

In general, the disclosure relates to the communication between two or more computers. More particularly, the disclosure relates to computer systems, methods and computer-program products that involve the identification of at least one computer by data that is characteristic of that one computer, or that involve the identification of at least one machine-learning agent that run on a computer.

### Background

Bi-directional communication between computers can be explained at different conceptual levels and perspectives. A "client computer" is a computer that requests information, and a "server computer" is the computer that provides the requested information. Any computer - no matter if acting as client computer or acting as server computer - can comprise multiple computing devices. The art also uses the terms "consumer computer" as synonym for "client computer" and "provider computer" as synonym for "server computer". Simplified, the consumer computer requests information and the provider computer provides the requested information.

In many scenarios, there are multiple client computers that interact with one or more server computers. For example, a user may operate a client computer to obtain travel information for a particular city. A server computer provides that information. As the user is not the only person who wishes to travel, other users operate their client computers as well, but a single server computer informs multiple users.

In bi-directional communication between computers, the computers need information to find each other. Data exchange protocols define details. For the communication over the internet, the computers - the client computers and the server computers - are associated with IP addresses. The skilled person is also familiar with fully qualified domain names (FQDN) as well as with domain name services (DNS) to translate FQDN to IP addresses, and vice versa.

The quality and quantity of data that users disclose to server computers depend on the information or service the users seek to obtain. For example, a user who seeks publicly available information such as the weather forecast for a particular city can remain anonymous, but users who look for hotel accommodation need to disclose at least their names. It is also well-established that server computers offer accounts to users that use services regularly.

The skilled person is also aware that bi-directional communication requires measures that are adapted to goals. Such goals are related to user authentication, data integrity, data confidentiality, and so on. The measures can require technical security implementations, and the users are aware of being asked for log-in credentials, keys, passwords and the like.

Browser fingerprinting (more in general "device fingerprinting") is an approach that allows server computers to collect further information. Such information is available as data that describe the client computers. But users (of the client computers) may not even be aware of that data and not being aware that such data is being collected.

To name only some data: the system settings or configurations for the client computer can be characteristic for a particular client computer. While every client computer has an operating system, a random-access memory (RAM), a collection of fonts (in a font list) and many other properties, the characteristics of the client computers can be described by attributes (A) that have different values (V).

The server computer that communicates with multiple client computers may store such attributes (A) with values (V) as so-called fingerprint data. When a particular client computer communicates with the server computer again (at a different, second point in time, with the same or with a different user, in a different session), the server computer may identify the particular client computer. Fingerprinting may be applied complimentary to security implementations, but fingerprinting can not replace security implementations. But nevertheless, fingerprinting may be advantageous, for example, because the user may not have to provide log-in credentials or the like in some cases.

Based on recognizing a fingerprint, the server computer may tailor the response to the computer user, but may also create behavioral profiles of computer users. The server computer may assemble content when the users are invited to take certain actions. To stay with the above travel example, the server computer may encourage the user of the client computer to plan the visit with stay at a certain hotel, and so on.

However, there are at least two aspects to consider: (a) Re-recognizing a particular computer (and a particular user that frequently uses that computer) can be used by the server computer to provide user-specific content, such as the mentioned advertising to book the hotel etc. (b) A particular user computer may be shared in time between two or more users. Fingerprints allow the server computer to recognize the particular client computer, but not necessarily to recognize the particular user. Tailoring the response to the (initial) user may fail. The subsequent user may be confronted with information that should have been directed to the initial user only. User authentication and data confidentiality would fail here.

The term "fingerprint" is a metaphor for uniqueness of information that can be related to a particular entity. For example, the entity can be a particular client computer or a particular internet browser that runs on the client computer (device fingerprinting), or the entity can be a particular user of that computer (user fingerprinting).

With multiple system settings or configurations that are to be collected (in the form of attributes A with values V), the likelihood to have two entities with the same attributes and values (i.e., the same fingerprints) decreases. Collections (or attribute sets) of attributes A with values V identify particular entities.

Simplified, from the perspective of the users, fingerprinting should be avoided (at least in general), but from the perspective of the server operators, fingerprinting should be enabled. For some use-cases, such as for banking applications, the user may accept fingerprinting as a further security measure or may even be welcome fingerprinting. In use-case scenarios where further security measures are not required, or where the previous user-activities are not important, users may not agree that server computers identify the client computers and profile the responses based on fingerprinting.

The art uses terms such as "fingerprint protection", "anti-fingerprinting privacy enhancing technologies" or similar terms for technical measures that make it difficult for the server computer to obtain attributes A with values V, and to use them to identify particular entity (i.e., computer, users etc.).

The following papers give further insight into this topic: (i) Gunes Acar et al "The Web Never Forgets: Persistent Tracking Mechanisms in the Wild", 21st ACM Conference on Computer and Communications Security, November 3-7, 2014, Scottsdale, Arizona, USA. (ii) Stefano Belloro, Alexios Mylonas: Know What You Did Last Summer: New Persistent Tracking Mechanisms in the Wild IEEE Access VOLUME 6, 2018, pages 52780-52792. (iii) Pierre Laperdrix, Walter Rudametkin, Benoit Baudry. Beauty and the Beast: Diverting modern web browsers to build unique browser fingerprints. 37th IEEE Symposium on Security and Privacy (S&P2016), May 2016, San Jose, United States. hal-01285470v2 (iv) Amit Datta, Jianan Lu, Michael Carl Tschantz: Evaluating Anti-Fingerprinting Privacy Enhancing Technologies. WWW '19: The World Wide Web Conference, Pages 351 - 362, May 2019. https://doi.org/10.1145/3308558.3313703

### Summary

The disclosed approach leaves the traditional black-and-white separation (to avoid or to enable fingerprinting) by providing a technical approach to selectively modify the transmission of attributes - one or more attributes A with values V - through a communication channel between the client computer and the server computer.

A gateway computer performs a computer-implemented method. The gateway computer intercepts the communication in the communication channel between a particular client computer and a server computer. The gateway computer identifies an attribute statement that the client computer either actively forwards to the communication channel, or that the server computer demands from the particular client computer to be forwarded to the communication channel.

By merely being forwarded to the communication channel, the attribute statement is not yet being communicated to the server computer.

The gateway computer assigns contribution weights to one or more attributes that belong to the identified attribute statement. Assigning weights to all attributes of the statement is not required. The contribution weights are data items that represent the extent by that - under the condition that the server computer would obtain knowledge of the one or more attributes - a particular attribute contributes to two abilities of the server computer.

The first ability is the ability of the server computer to identify the particular client computer among a plurality of client computers, and the second ability is the ability of the server computer to provide a response that fits to a request of the client computer. According to the first and second abilities, the contribution weights are called "uniqueness weight" and "function weight", respectively.

Based on that assigned contribution weights, the gateway computer modifies at least some of the attributes in the attribute statement to a modified attribute statement. In the modified attribute statement, the weights are different from the (original) attribute statement such that the abilities change: the first ability (to identify the particular client computer) is being reduced, but the second ability (to provide the response that fits to the request of the client computer) is maintained.

In other words, the gateway modifies the attribute statement such that the server computer has less ability to do fingerprinting. As uniqueness is the opposite of diversity, the uniqueness weights can also be considered as diversity weights. From a different perspective, the disclosed computer-implemented method allows to benefit from fingerprinting with technical implementations that balance out the interest of both communication partners.

As already mentioned, the client computer can actively forward the attribute statement (to the communication channel, without the attribute statement reaching the server computer), or the server computer can demand from the particular client computer that an attribute statement is to be forwarded to the communication channel.

Depending on the scenario - (i) actively forwarding the attribute statement or (ii) passively waiting for the demand - the gateway computer has two approaches to perform the assigning and the modifying steps.

In the first approach, the gateway computer modifies at least some attributes that belong to the attribute statement, and forwards a modified attribute statement to the server computer.

In the second approach, the gateway computer intercepts the communication from the server computer to the particular client computer. This communication - named the request to the client computer - comprises an attribute statement in form of a demand to the client computer, demanding to supply attributes to the server computer. In other words, in the second approach, the attribute statement does not have to comprise attributes with values, but the attribute statement identifies the attributes for which the server needs to know the values.

Both approaches are independent from each other, but they can be applied in combination.

Further, the disclosed method is also applicable to attributes from machine-learning agents that run on the client computers. Further disclosed is a computer-implemented method to operate a gateway computer that participates in the communication between a particular client computer - that belongs to a plurality of client computers - and a server computer, over a communication channel, wherein the client computers run machine-learning agents.

The gateway computer intercepts the communication between the particular client computer and the server computer. The computer thereby identifies an attribute statement that the particular client computer either actively forwards to the communication channel or that the server computer demands from the particular client computer to be forwarded to the communication channel. The attribute statement comprises attributes of the machine-learning agent, the MLA-attributes in short.

The gateway computer assigns contribution weights to one or more attributes in the identified attribute statement, wherein the contribution weights are data items that represent the extent by that a particular MLA-attribute contributes both to the ability of the server computer to identify the particular machine-learning agent, hereinafter the uniqueness weight, and to the ability of the server computer to provide a response that fits to a request of the particular machine-learning agent, hereinafter the function weight.

The gateway computer, based on the assigned contribution weights, modifies the attribute statement to a modified attribute statement with different weights so that in continuation of the communication, data in the communication channel that is directed to the server computer is modified, so that the ability of the server computer to identify a particular machine-learning agent is being reduced, while the ability to provide the response that fits to a request of the machine-learning agent is maintained.

Optionally, the ability of the server computer to identify the particular machine-learning agent comprises the ability to perform fingerprinting.

Optionally, the ability of the server computer to identify the particular machine-learning agent comprises to identify the hardware of the particular client computer or to identify the user of that particular client computer.

Optionally, in the step modifying, the gateway computer modifies the attribute statement to the modified attribute statement by applying attribute change rules that have been obtained by applying statistics to attributes in communications with client computers that belong to a peer group (peer attributes), or that have been obtained by applying statistics to attributes in communications with machine-learning agents that belong to a peer group (peer MLA attributes).

Optionally, the attribute change rules cause the gateway computer to modify the attribute statement by replacing one or more values of an attribute with one or more alternative values, removing an attribute from the attribute statement, removing one or more values from the attribute so that it turns into a non-defined attribute, or by adding a further attribute to the attribute statement.

Optionally, the attribute change rules have been obtained by applying statistics to the peer attribute statements with applying statistics that process contribution weights of the peer MLA attributes.

Optionally, the attribute change rules prefer attribute values with relatively high occurrence in the peer attribute statements in the peer group.

Optionally, the contribution weights of the peer attributes have been processed such that the modified attribute statement comprises alternative values that cause their attributes to have contribution weights with relatively low uniqueness weight but with relatively high function weights.

Optionally, the gateway computer is intercepting the communication to identify an attribute statement with attributes that for the particular machine-learning agent belong to at least one of the following classes: a first attribute class for the identification of linguistic patterns; a second attribute class for the identification of signs that the machine-learning agent applies; a third attribute class with detectable parameters of the machine-learning agent that comprises any of particular interaction latency, particular token frequency distributions, and the number of tokens; a fourth attribute class for the format of messages; and a fifth attribute class with statistical data, applying Kullback-Leibler (KL) divergence against a peer group of machine-learning agents.

Optionally, in the step modifying, the gateway computer modifies the attribute statement to a modified attribute statement by differentiating class-specific change rules.

Optionally, the gateway computer performs intercepting the communication between the particular client computer and the server computer with checking a validity of the message that comprises the attribute statement, based on pre-defined rules and continues with step assigning contribution weights to one or more attributes only if the message has been checked to be valid.

Optionally, the gateway computer performs modifying by modifying a demand from the server computer to provide machine-learning agent attributes.

Optionally, identifying the attribute statement comprises to identify a semiotic property statement that characterizes a non-human identify or that characterizes the collaboration between a human and the agent, wherein the properties comprise a plurality of signs and parameters for the interaction flow via the communication channel.

Optionally, the step identifying an attribute statement comprises to identify a semiotic property statement that characterizes a non-human identity or a human-agent team; wherein the semiotic property statement properties comprise a plurality of signs and detectable parameters characterizing the interaction flow, and wherein modifying the semiotic property statement comprises performing an embedding space collision by optimizing a new input vector to generate a functional output that is identical to the original intent while remaining distinct from the continuous representation of the non-human identity in the embedding space of the model.

A computer system comprises a plurality of modules which are adapted to perform the steps of any of the computer-implemented methods.

A computer program product that, when loaded into a memory of a computer system and executed by at least one processor of the computer system, causes the computer system to perform the steps of any of the computer-implemented methods.

### Brief Description of the Drawings

FIG. 1 illustrates the communication between a client computer and a server computer, as well as shows an attribute diagram;
FIG. 2 illustrates an overview with activities and method steps;
FIGS. 3A and 3B illustrate two-dimensional attribute diagrams to explain attribute types and to explain statistics;
FIGS. 4A and 4B illustrate the communication between the client computer and the server computer, wherein a gateway computer with one or more modules performs a computer-implemented method that comprises to modify attribute statements, with FIG. 4A and 4B differentiating in implementation details;
FIG. 5 illustrates multiple client computers, a server computer, and two auxiliary computer modules that can be used to identify attribute change statements by evaluating data from client computer of a peer group;
FIG. 6 illustrates a flow-chart diagram of the computer-implemented method to operate the gateway computer, and also illustrates steps to obtain attribute changes rules;
FIG. 7 illustrates the bi-directional communication between the client computer and the server computer, as well as illustrates machine-learning agents running on the client computers;
FIG. 8 illustrates the multiple machine-learning agents that run on the client computers, the server computer, and the two auxiliary computer modules that can be used to identify attribute change statements by evaluating data from the machine-learning agents of a peer group; and
FIG. 9 illustrates a generic computer.

### Detailed Description

### Writing convention

Brackets [ ] stand for vectors (with element index i) for example in attribute statements [A] with multiple attributes Ai (i = 1 to i = N). Parentheses ( ) stand for vectors with weights that are applicable to individual attributes Ai. Such vectors have two elements (U, F) or have more elements (U, F, P). Index j applies to values Vij of Ai.

The acronym MOD stands for the result of a modification, PEER as well as the apostrophe' identify the origin of data from a peer group of computers (or of machine-learning agents), REF stands for reference data (that can be obtained from a peer group or otherwise), and ALT stands for alternative data (that can be obtained from REF or PEER, or otherwise).

### Overview

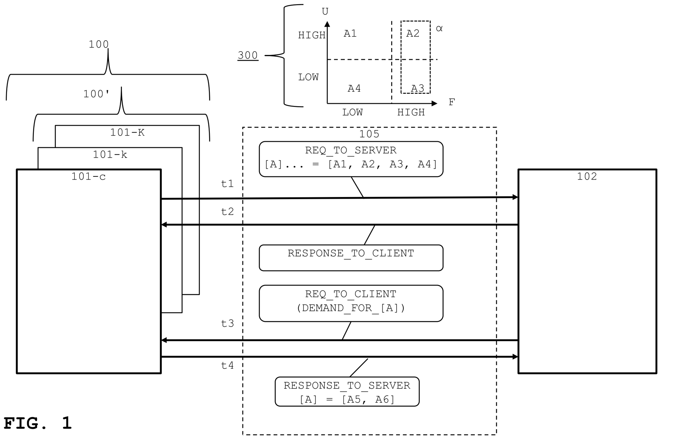

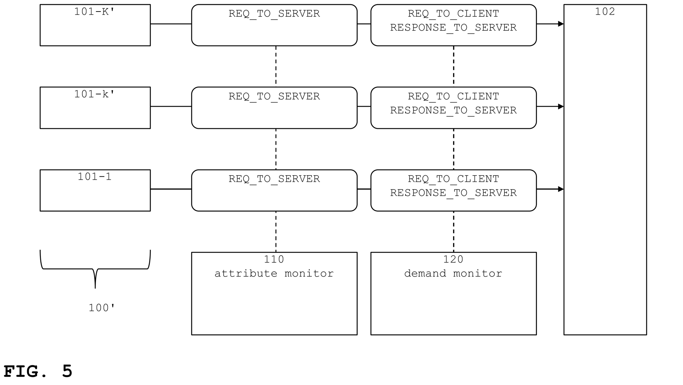

FIG. 1 illustrates the bi-directional communication between client computer 101-c and server computer 102. Client computer 101-c belongs to plurality 100 of client computers 101-k (k = 1 to K). Plurality 100 is differentiated into client computer 101-c (that is a particular client computer) and the client computers of peer group 100' (cf. FIG. 5, with indices k' = 1 to K', but not c, K' = K - 1).

Horizontal arrows illustrate information exchange events between computers 101-c and 102, within communication channel 105. Information that flows in the direction from client computer 101-c to server computer 102 ("TO_SERVER", in the figure to the right) can comprise one or more attributes A, in attribute statements [A]. Information that flows in the opposite direction can comprise a demand to provide attributes: DEMAND_FOR_[A]. The demand comprises an attribute statement [A] as well. An attribute in a demand may not yet have a value, so that the attribute in the demand can be undefined.

As server computer 102 can use attributes to distinguish client computer 101-c (by "fingerprinting") from other client computers (i.e., in peer group 100'), attributes A can contribute to uniqueness (of client computer 101-c). As server computer 102 uses attributes A to tailor the response (to the client computer), attributes A can contribute to the function (for example, by the server computer transmitting particular data to the client computer).

FIG. 1 shows an extreme - but undesired - situation: Server computer 102 can use all attributes A in attribute statement [A] that client computer 101-c has forwarded to communication channel 105 to server computer 102. Also, server computer 102 can use DEMAND_FOR_[A] to instruct client computer 101-c to deliver further attributes that server computer 102 has not yet received.

In such a situation, fingerprinting would not be limited, and the burden to prevent fingerprinting would be shifted to client computer 101-c.

### Overview to the description

The description now shortly introduces how such an undesired situation can be avoided and thereby refers to other figures.

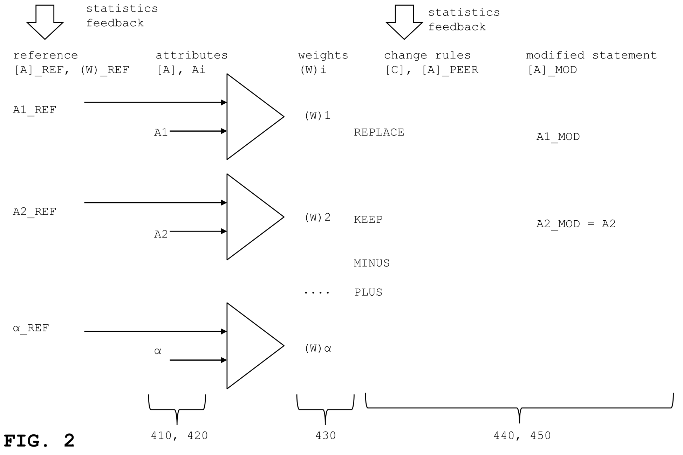

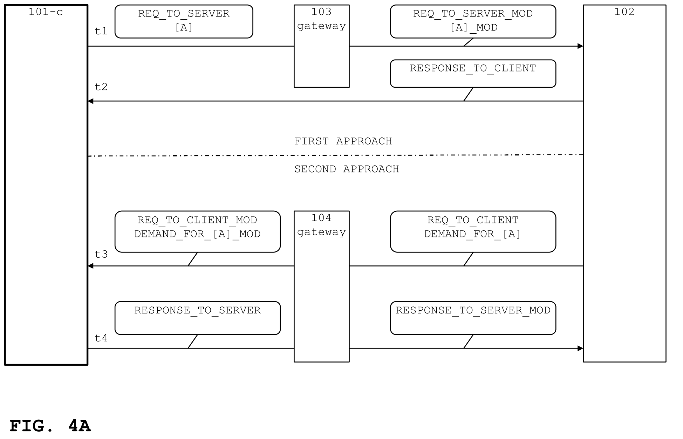

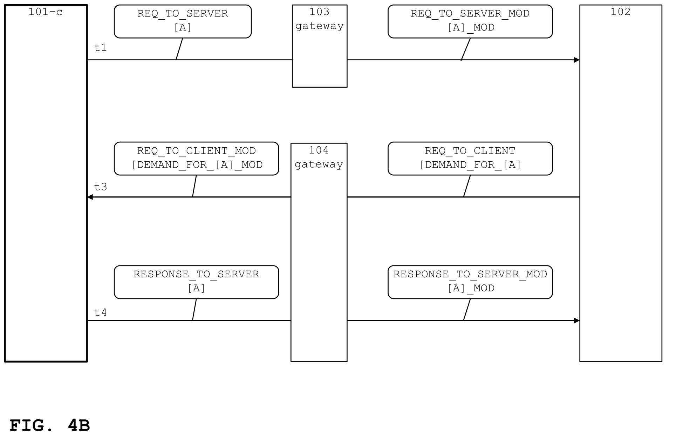

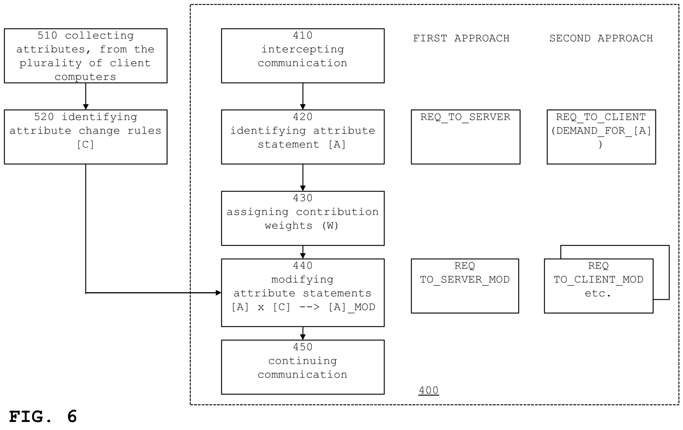

FIG. 2 illustrates an overview by showing activities and method steps, from left to right. Activities (cf. steps 510/520 in FIG. 6) are performed by computers, such as a gateway computer, and the results of these activities, such as [A]_REF, (W)_REF, [A]_PEER etc. are available before a gateway computer (103/104 in FIGS. 4A, 4B) starts executing a computer-implemented method (item 400, in FIG. 6).

The contribution to uniqueness and to function of attributes is generally known in advance and can serve as reference, at least for some attributes [A]_REF. This contribution is shown here as (W)_REF. The references do not have to come from the peer group, but can be based on empirical data (cf. the above-mentioned papers).

According to the computer-implemented method, the contribution to uniqueness and to function can be estimated (in a method step 430 assigning contribution weights). However, the first step is intercepting the communication 410. FIGS. 4A and 4B show that gateway computer 103/104 intercepts the communication between client computer 101-c and server computer 102. The skilled person is familiar with intercepting. For example, client computer 101-c can direct requests to gateway computer 102 but the request can contain the network address of the server computer so that the gateway computer can continue forwarding the request to the server computer. Using browser add-ons that combine network addresses (such as the URLs) from both the gateway and the server computer is just an implementation example.

As a result of the interception, the gateway computer identifies an attribute statement [A], step 420. By way of example, FIG. 2 shows attributes A1 and A2 (cf. FIG. 1) as well as attribute group α (cf. FIG. 1).

The gateway computer assigns contribution weights (W), step 430, here in vector notation with (W)i for attribute Ai (of [A]), that is (W)1 for A1, (W)2 for A2 and W(α) for attribute group α. This assignment can be done by comparing the attributes of attribute set [A] to the reference attributes [A]_REF. However, it is not required to assign (W)i to each of the attributes of the attribute statement [A]. It is also possible to leave (W)i or elements of (W)i non-determined.

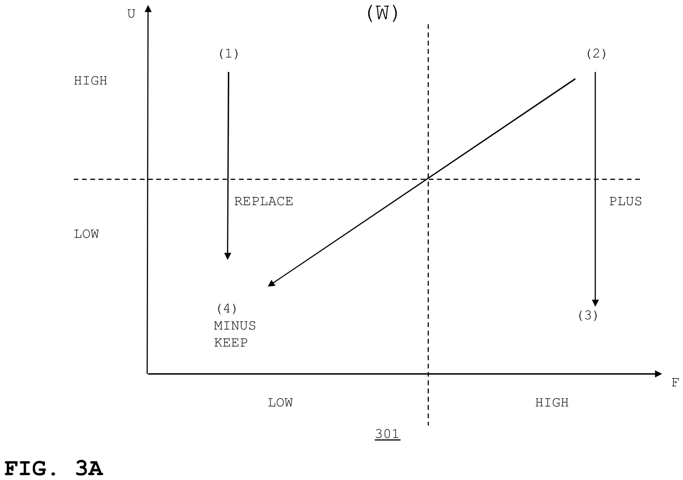

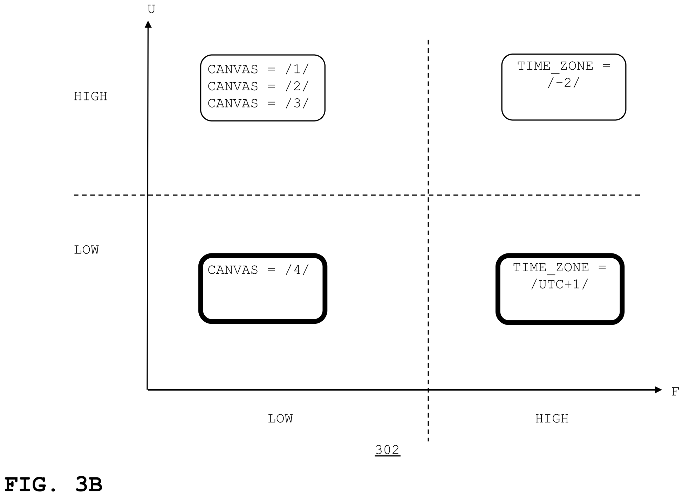

The gateway computer can change the contribution (with FIGS. 3A and 3B, cf. method step modifying 440, and continuing communication 450). The ability of server computer 102 to identify client computer 101-c can be reduced while the ability to provide responses is maintained. FIG. 2 shows the change according to change rules [C], again in vector notation because different changes may be applied to different attributes Ai in attribute set [A], for example: [A] processed by [C] ---> [A]_MOD.

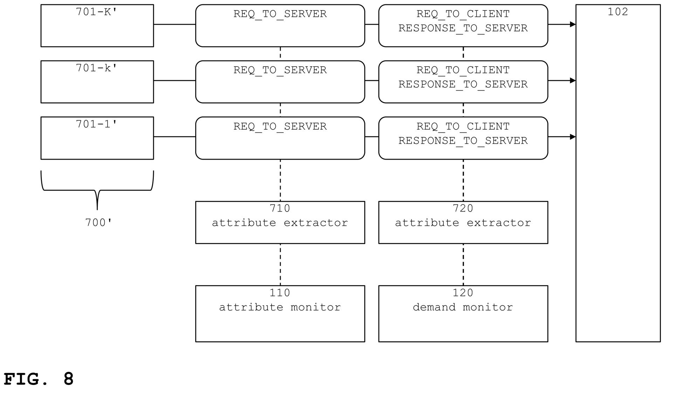

FIG. 2 uses a simplified notation with REPLACE, KEEP, MINUS, PLUS etc. Changes can also be applicable to attribute group α. Change rules [C] may comprise alternative data such as attribute data [A]_PEER (for REPLACE, PLUS), or instructions (e.g., MINUS, KEEP). The alternative data has been obtained in advance from the computer of the peer group (cf. item 100' in FIG. 1, also item 700' in FIG. 8). The description will explain that alternative data can be data that auxiliary computer modules (110, 120 in FIG. 5) have collected previously from peer group 100'.

Modifying (step 440) results in modified statement [A]_MOD. In [A]_MOD, attribute A1 is being modified to A1_MOD (by getting an alternative value, here symbolized by REPLACE). Attribute A2 remains unchanged A2_MOD = A2, here symbolized by KEEP. Some other attributes may be removed from [A], symbolized by MINUS. Some further attributes may be added, PLUS. It is also possible to remove or to add attribute values. An attribute group α can be modified accordingly.

As a result of the modifications, the mentioned contributions can be changed.

### Origin of reference of alternative data

As method 400 can be performed with reference data and with alternative data, the description explains how to obtain such data prior to executing method 400 (cf. steps 510/520 in FIG. 6).

There are two main principles. The first principle is to use statistics, as explained with FIG. 5, and the second principle is to evaluate feedback that the client computers from peer group 100' provide to server computer 102.

There can be a preference to use statistics to obtain alternative data for modifying with the target to reduce the uniqueness contribution (because alternative data is usually common data in the peer group). There can be a preference to use feedback to obtain alternative data for modifying with the target to keep the function contribution.

### Attributes and contributions

In the following, data that represents the extent by that a particular attribute A contributes (to uniqueness and/or to function) are called "contribution weights" U and F. With attribute indices, the notation is Ai, Ui, and Fi.

The contributions are mutually related, and the skilled person is able to evaluate contribution weights U and F for a particular communication event (e.g., "TO_SERVER", and "TO_CLIENT") in real-time, based in previously acquired information (cf. statistics and feedback). For example, some particular attributes (with particular values) are known for their particular contributions and they can be used as reference attributes (cf. A_REF in FIG. 2). As fingerprinting had been discussed by the above-mentioned papers, empirical data from the papers can be uses as reference data A_REF, as least partially.

As the contributions may change over time, the skilled person is able to adjust references, by using statistics. For example, with the process of time, the attribute BROWSER_VERSION changes. More and more computers in peer group 100' would have updated their internet browsers to newer versions. This would increment version numbers (i.e., attribute values), and the reference BROWSER_VERSION_REF would change over time. The description will explain that such reference can be obtained with an attribute monitor (cf. item 110 in FIG. 5, PEER being used as REF). But if client computer 101-c would still use an old-dated browser, the "old" number would eventually be good fingerprinting data. In terms of contribution, U_BROWSER_VERSION (of computer 101-c) would be high because BROWSER_VERSION ≠ BROWSER_VERSION_REF.

As browsers are updated from time to time for all computers (not only 101-c but also the computer in the peer group), BROWSER_VERSION can be BROWSER_VERSION_PEER = BROWSER_VERSION_REF, with U_BROWSER_VERSION turning LOW.

As the contributions may change over time, the skilled person is able to adjust references, by using feedback as well. For example, it can be determined that the attribute LANGUAGE with the value /German/ may be relevant for the server computer to provide responses in that language (relatively high contribution to function, identified by feedback).

As already mentioned, each attribute A has one or more values V. For example, a language attribute LANGUAGE represents one or more natural languages (such as German or English) that can be associated with the user of client computer 101-c, or a system attribute SYSTEM (or PLATFORM) represents the operation system of client computer 101-c.

The description can use the notation Ai = /Vij/ that identifies particular attributes by an attribute index i and identifies values by a value indexj. Multiple attributes can be represented by A x V matrices (e.g., rows for the attributes x columns for the values, or vice versa).

It is also possible to identify a particular attribute Ai by a word in uppercase letters and to identify one or more values in / /. For example, a language attribute can be given as LANGUAGE = /German/, or LANGUAGE = /German, English/.

As used herein, a "defined attribute" is an attribute Ai for which at least one of its values is defined, e.g., LANGUAGE = /German/, LANGUAGE = /German, English/. An "undefined attribute" is an attribute Ai for which a value has not been specified /.../. As variations are possible, attributes can be partly defined attributes.

Attributes Ai can have components, for example the attribute LANGUAGE can have the components "primary language" and "secondary language", both components can be treated like separate attributes.

For simplicity, the description may refer to attributes Ai, but may avoid citing their values Vij. FIG. 1 also shows attribute diagram 300 that by way of example locates attributes A1, A2, A3, A4 according to two-dimensional contribution weights (W) (e.g., uniqueness weight U and function weight F, simplified binary scores: uniqueness score U and function score F).

As the contribution weights (W) have (at least) two dimensions, the description uses the notation ( )
(W) = (U, F) (in general)
(W)i = (Ui, Fi) (for a particular attribute with index i)
[(W)] (the set of weights of an attribute statement [A])

In other words, the figure symbolizes that attributes Ai alone (or in combination) can have different contributions (expressed by the contribution weights) in view of uniqueness and function. If these contribution weights are identified by a computer (such as client computer 101-c, server computer 102, or gateway computer 103/104 in FIGS. 4A, 4B), the contribution weights (W)i can be processed by numerical data (such as by the scores), or by descriptive data.

Attribute diagram 300 is illustrated as a 2D-coordinate system. Attributes A1, A2, A3 and A4 are associated with different contribution weights (W)i for Ui and for Fi. The illustration of U at the abscissa and of F at the ordinate is just a convention. For simplicity, FIG. 1 shows the weights (W) as binary scores as LOW or HIGH in diagram quadrants.

Attribute group α is an example for multiple attributes (e.g., attribute A2 in combination with attribute A3, both with values) that are weighted in combination (W)α. In other words, the combination has weights (W)α, but the individual weights (W)2, (W)3 of the group members A2 and A3 can be different from that of the group (W)α.

As already mentioned, in the communication between client computer 101-c and server computer 102, the attributes Ai can play a role in the sense that the server computer can distinguish particular client computers, and/or can tailor the communication with the particular client computers. The description therefore looks at the communication between the computers.

### Communication with requests and responses

As used herein, the computers 101-c, 102 send requests (REQ in short) to seek responses (RESPONSE). Therefore, the figure differentiates
- REQ_TO_SERVER, being requests from client computer 101-c to server computer 102, with an attribute statement [A],
- RESPONSE_TO_CLIENT, being responses from server computer 102 to client computer 101-c,
- REQ_TO_CLIENT, being requests from server computer 102 to client computer 101-c, with DEMAND_FOR_[A], and
- RESPONSE_TO_SERVER, being responses from client computer 101-c to server computer 102, with [A] that would answer the demand.

Generally, requests precede responses. For simplicity, the figure illustrates a first data exchange with REQ_TO_SERVER at t1, subsequent processing at server computer 102, RESPONSE_TO_CLIENT at t2; and illustrates a second data exchange with REQ_TO_CLIENT at t3, subsequent processing at client computer 101-c, and RESPONSE_TO_SERVER at t4.

The first and the second data exchanges can be replaced in time (i.e., starting with REQ_TO_CLIENT and REPSONSE_TO_SERVER in principle possible). The REQ_TO_CLIENT can also be considered to be a response to an earlier request. The communication between both computers 101-c and 102 can also be initiated otherwise, for example, client computer 101-c executing a script (in its browser). Such as script may have been injected to client computer 101-c from server computer 102 (or from other computers) earlier. But both data exchanges can even be independent from each other.

However, it is convenient to assume that both exchanges are related to each other and that the RESPONSE_TO_CLIENT and the REQ_TO_CLIENT are communicated at the same time (t3 and t4 would fall together), technically in the same message.

Variations are possible, for example, the RESPONSE_TO_CLIENT may be skipped.

In implementations, the communication between the computers can be implemented by internet techniques, such as for example, by HTTP, HTTPS, or other protocols. The requests and responses can be implemented, for example, by HTTP headers and/or code to be executed by a runtime-environment on the client computer, such as JavaScript on an interpreter or compiler. For example, the client computer can request a web page (in HTML) from the server computer. In that case, the initial REQ_TO_SERVER comprises the so-called HTTP-header with attributes such as "Accept-Language" (or LANGUAGE). In the example, the REQ_TO_SERVER that can be implemented by HTML, [A]_ REQ_TO_SERVER would be part of the HTML-header.

It is noted that attribute statement [A] does not have to comprise the contribution weights (W): client computer 101-c is weight-agnostic.

A first attribute statement [A]_REQ_TO_SERVER is part of request REQ_TO_SERVER (at t1), in the example, [A]_REQ_TO_SERVER = [A1, A2, A3, A4]

A second attribute statement [A]_RESPONSE_TO_SERVER is being demanded by server computer 102, in that the REQ_TO_CLIENT comprises an instruction to client computer 101-c to provide [A], here noted as DEMAND_FOR_[A]. For example, server computer 102 may demand to receive a statement that comprises A5 and A6: DEMAND_FOR_[A] = DEMAND_FOR_[A5, A6]

The second attribute statement [A]_RESPONSE_TO_SERVER belongs to the response at t4. For example, the attributes could be [A]_RESPONSE_TO_SERVER = [A5, A6]

[A]_RESPONSE_TO_SERVER can comprise attributes that server computer 102 has not received yet.

As in FIG. 1, the statement [A]_REQ_TO_SERVER can comprise attributes A1, A2, A3 and A4 that could have (W)i as in attribute diagram 300, or [A]_REQ_TO_SERVER can comprise different attributes that have different weights. But it is again noted, that client computer 101-c would be (W) agnostic.

### Contribution and Criteria

Two or more attributes have different relevance to uniqueness and to function. The weights are therefore different. For example, statement [A]_REQ_TO_SERVER may comprise attributes that set a communication context, such as the above-mentioned language attribute LANGUAGE, a time-zone attribute TIME_ZONE and others. As server computer 102 may not be able to identify client computer 101-c (based on LANGUAGE and TIME_ZONE alone), server computer 102 may use DEMAND_FOR_[A] to instruct client computer 101-c to provide the attribute CANVAS.

The difference can also be established for a single attribute Ai with difference values Vij (for different points in time, for different client computers, etc. e.g., the language attribute), for example: $\left(W\right) LANGUAGE = / German / \neq \left(W\right) LANGUAGE = / English /$

The uniqueness weight Ui of one or more attribute Ai describes the contribution (of the attribute(s)) to the ability of server computer 102 to identify a particular client computer 101-c, under the condition that server computer 102 has obtained knowledge of the one or more attribute.

The function weight Fi of one or more attribute Ai describes the contribution to the ability of server computer 102 to provide a response that fits to the request, again conditionally that server computer 102 has obtained knowledge of the one or more attributes. The function weight Fi can also be considered as an indicator for the usefulness of the attributes.

As used herein, the term "contribution" is also a synonym for "relevance". By obtaining particular attributes A (with one or more values), server computer 102 is enabled to distinguish (client computer) and to tailor (responses that fir to the request from the client computer). Otherwise, server computer 102 is not enabled.

To have a response that fits to the request is a technical feature. The request REQ (with [A]) specifies technical constraints at the client computer that need to be observed (but ignoring the content), such as in the following non-limiting examples. (Feedback that can be collected is given as well, such as feedback in case of mis-fits).
- The client computer may specify the language in that content is to be provided (in the response). The server computer would have to access a data field for content in that language. (In case of mis-fits, the client computer may repeat the request, and repetitions can be collected as feedback).
- In responses with images, the images should have a format (e.g., in image type, size etc.) that allows displaying the image on a display of the client computer. (In case of non-fits, the client computer may request a different format, and such extra requests can serve as feedback information.)
- In responses with scripts, the scripts must be provided in a script language that the client computer understand so that the scripts can be executed. (Feedback may be collected from error messages that may result from inconsistencies during execution.)
- In responses with data in relation to time, the time-zone at the physical location of the client computer would have to be adapted.
- In responses that comprise computer instructions to be executed (e.g., downloading programs from servers), the instructions have to fit to the operating system of the client computer.

As the request-response fit is technical, the content of the response - unless controlled by attributes - does not matter. If - for example - the client computer requests railway train schedule data and the server would respond with the content that a particular train would be cancelled, this is not a mis-fit (as used here in the technical sense).

Server computer 102 has obtained knowledge by having received an attribute statement [A]. In other words, the weights (W)i = [Ui, Fi] are related to the attribute statements [A] that server computer 102 sends to client computer 101-c (as RESPONSE_TO_CLIENT, or as REQ_TO_CLIENT with DEMAND_FOR_[A]).

As the attributes have to be obtained by the server, the attributes are discussed in view of server computer 102.

The contribution weights (W)i can be represented by numeric values, by convention for example, "0" for no contribution, "1" for maximal contribution, alternatively as weight percentages from 0% to 100 %).

In case that the server computer (or any other computer, such as a gateway computer) processes the contribution weights (W) by numeric values, the description uses the term "score".

An extreme and simplified example for (W) can be viewed with binary scores with the allowed combinations:
(U, F) = (HIGH, LOW), (HIGH, HIGH], (LOW, HIGH), or (LOW, LOW)

It is also possible to classify the contribution by classes (or descriptors), and the classes can be described in words. Representing classes by numeric values and/or scores is possible as well, but not outlined here for simplicity. If binary, the classes could be called HIGH and LOW.

In view of uniqueness contribution weight classes (U classes), the following examples are given:
- Attributes in the "extremely high contribution to uniqueness" class are attributes Ai with values Vij that are typical for a particular client computer. For example, the canvas attribute CANVAS has a value (usually implemented as a hash value) that is unique for that particular client computer among a set of client computers.
- Attributes in the "group contribution to uniqueness" class are attributes Ai that allow to identify a particular client computer only if (case 1) one or more further particular attributes in computer are known to the server computer, or if (case 2), the attribute Ai has a certain combination of values Vij, Vi(j+1), etc. For example, the font attribute (FONT_LIST) comprises multiple values (e.g., a list of fonts that are installed on client computer 101); the font list usually differs from computer to computer so that the FONT_LIST attribute contributes to uniqueness. In a further example, the browser version attribute BROWSER in combination with the operating system attribute SYSTEM contributes to uniqueness as well, but in combination with other attributes.
- A particular attribute A alone can have "high contribution" to U.
- A particular attribute A - if taken alone - may have "no contribution to uniqueness". For example, the attribute SYSTEM (the identification of the operating system) if taken alone does not allow to differentiate computers.

In view of function contribution weights (F classes), the following examples are given:
- Attributes in the "extremely high contribution to function" class (e.g., F = 100%) are attributes Ai for which the knowledge of its (one or more) values Vij is essential for the server computer to provide a response. For example, the network addresses of client computer 101-c is required, otherwise the server computer can't send the response.
- Attributes in the "medium contribution to function" class are attributes Ai for which the knowledge of its (one or more) values Vij allows the server computer to provide a response that is useful for the user of the client computer. For example, knowing LANGUAGE allows the server computer to provide a response in a particular language (e.g., LANGUAGE = /German/), but in case of not knowing LANGUAGE, the server computer can provide a response in a default language (e.g., English). In case that the user further interacts with the client computer, a further request/response cycle can update the response with a different language. In other words, the identification of a user-preferred language (LANGUAGE) allows the server computer to provide a response in that language, but the absence of that knowledge still allows the server computer to provide a response.
- Attributes in the "extremely low contribution to function" class (e.g., F = zero) are attributes Ai for which the knowledge of its (one or more) values does not matter.
- In contrast, the identification of a particular browser version is not relevant for such a function, because every browser should have the capacity of display text in different languages.

### Multiple attributes

As attributes are available in groups, (W)α (cf. FIG. 2) stands for the weights if the attribute of the group α are processed in combination. More in detail, (W)α = (maximal weight U, maximal weight F).
Server computer 102 knowing attribute group α is enabled (or disabled to differentiate computers and to tailor the responses according to the (max) weights).

Following the same principle, (W)[A] can stand for the weights if the attributes of the attribute statement [A] are communicated (cf. TO_SERVER): (W)[A] = (maximal weight U, maximal weight F).

### Simplification

In the following, the description simplifies the weight granularity to binary weights LOW and HIGH, here with attribute indices i. According to its contribution to uniqueness, an attribute can have U1 = HIGH, U2 = HIGH, U3 = LOW, U4 = LOW. According to its contribution to function, an attribute can have F2 = HIGH, F3 = HIGH, F1 = LOW, F4 = LOW, cf. diagram 300 in FIG. 1.

As already mentioned, an attribute group (such as α) can have weights (W)α well. It is noted that transmitting the attributes of the group in separate attribute sets [A] (i.e., at different points in time), may change the relevance.

Contribution can be based on the attributes A, but can also be based on particular values V. The description focuses on attributes A and provides examples:

### Attribute types, and examples

The description now investigates attributes further; but stays with the simplified example of FIG. 1. For simplicity, the description continues with the binary weights HIGH and LOW. The description also investigates
- the modification of at least some of the attributes Ai in attribute statements [A] so that the modified attribute statement [A]_MOD has different weights, with (W)[A] ≠ (W)[A]_MOD (cf. FIG. 3A),
- statistics to identify alternative attribute statement [A]_ALT to be used to modify [A] to [A]_MOD, cf. FIG. 3B.

FIG. 3A illustrates a two-dimensional attribute diagram 301 for attribute types. Attribute types (1), (2), (3) and (4) refer to attributes that share weights (W), or attributes for which the weights (W) are similar, with predefined similarity criteria.

In general, attribute weights (W) can be pre-defined for particular attributes. The description gives details for some attributes (and attribute types) by way of example:
- Attributes of type (1) have weights (W)(1) = (U, F)(1) = (HIGH, LOW). For example, the font list FONT_LIST is a multi-value attribute that assists server computer 102 in identifying a particular client computer 101-c (from multiple others, cf. FIG. 1). U is therefore HIGH. The font list is however of less (or even no) relevance for a function to display text, hence the weight F is LOW.
- Attributes of type (2) have weights (W)(1) = (HIGH, HIGH). For example, the indication that the user of client computer 101-c seeks data in a format that is adapted to his or her challenge (e.g., Braille format) is relevant for uniqueness but also relevant because it lets server computer 102 respond in that format.
- Attributes of type (3) have weights (W)(3) = (LOW, HIGH). For example, the identification of a preferred language LANGUAGE (of the user of client computer 101) is relevant to provide responses (cf. RESPONSE_TO_CLIENT) in that particular language. For example, the weather forecast would show text in German, but not in English only. But as there are many computers with German as the preferred language, the contribution to uniqueness U is LOW.
- Attributes of type (4) have weights (W)(4) = (LOW, LOW). A prominent example is the identification of the operating system (of computer 101).

The weights are explained for attributes separately, but weights can also be assigned to groups (cf. group of attributes, cf. FIG. 5, also groups that are attribute statements [A], as already explained.

It is again noted that weights (W)i can be based on the attributes A, as explained, but can also be based on particular values Vij. Weighing is also possible between values Vij of the same attribute. For example, LANGUAGE = /German/ would have a different (W)_LANGUAGE than, for example, LANGUAGE with a value that points to a language that has only a few speakers.

The same principle applies to combinations, for example, the attribute combination LANGUAGE = /German/ and TIME_ZONE= /UTC+1/ would have a different (W)i than the combination LANGUAGE = /German/ and TIME_ZONE= /UTC+3/, based with the statistical observations. (There is simple reason behind that statistics, the number of users who prefer German and that are located near the Atlantic Ocean is relatively small, but the computer creates statistics, not semantic insights)

### Purpose P as a further weight

As explained, having a response that fits to the request is a technical feature. However, a further weight dimension can be a purpose P and that can relate to content. For simplicity, that dimension is not illustrated, but the skilled person can imagine having an attribute diagram with 3D weights (W) = (U, F, P). For example, a first purpose can be related to request and response cycles that take the current time into account (e.g., the server computer providing real-time data regarding train traffic). A second purpose can be related to request and response cycles that are specific to user languages (e.g., the server computer providing geographical maps in different languages). In difference to the function weight F (that for example lets the images to have a suitable size), the purpose weight P can be used to implement information exchange that is more focused to content.

When different purposes are considered, the same attribute Ai can change (W)i = (U, F). For example, the LANGUAGE = /German/ has less relevance for the function "real-time train traffic information", but TIME_ZONE (e.g., UTC+1) is important.

### Information modification by down-weighting, replacing, camouflaging

To balance the above-mentioned interests, the communication of attributes Ai (from the client computer to the server computer, in attribute statement [A]) can be limited, by two steps (that are steps of a computer-implemented method).
- weighting the attributes [A] that the client computer 101-c would transmit to the server computer in an attribute statement [A] (i.e., to identify (W)[A]), and
- based on the assigned weights (W)[A], modifying the attributes in the attribute statement [A] to a modified attribute statement [A]_MOD accordingly (based on rules, such as for example, by modifying the values).

For both weighting and modifying, the computer uses data that it has collected previously (cf. modules 110 and 120 in FIG. 5). Simplified, and with details to be explained, the computer has identified attributes A with values V that are common between multiple client computers (such as the computer of peer group 100', cf. FIG. 1 and FIG. 5). Such identification can comprise a classification into common attributes and non-common attributes (also into common values and non-common values). As common data can be used in the modifying step, modifying can be regarded as "harmonizing".

### Attribute change rules [C]

Rules to change attributes, can be pre-defined for particular attributes, they are attribute specific. The input for the change is the assigned weight (W), for both U and F, or for U alone, or for F alone.

For example, the rule C1 for attribute A1 can be IF (W) = (HIGH, LOW) REPLACE detected value V by an alternative value (e.g., provided by monitor module 110).

For example, the rule for an attribute can be IF attribute = PLATFORM = 'Windows' (that implies U = LOW) DO KEEP. In other words, for some attributes, the weights (W) are implicitly known.

For example, a rule Cα can be pre-defined for attribute group α.

Rules can change over time, at least based on feedback and based on statistics.

In view of the weights (W) in statement [A], the modification [A] to [A]_MOD can be considered, for example as down-weighting and/or as camouflaging.

As used herein, down-weighting means that weights (W) are made smaller (at least for some attributes in the statement, not necessarily for all). That can imply replacing attribute values V with common values. Both it is also possible to cancel attributes (or remove them from [A]) to prevent attributes from reaching the server computer. In the above statement notation, the modified statement [A]_MOD can be the original statement [A] minus some attributes.

As used herein, camouflaging can be implemented by adding attributes (or adding attribute values, cf. PLUS in FIG. 2, FIG. 3A), but keeping attributes at relatively high function contribution F. In other words, camouflaging is the opposite of down-weighting. In view of the statement notations, [A]_MOD comprises [A] but further comprises "plus attributes".

For separate attributes, both implementations may be combined.

In case that attributes (or attribute values) are added or being replaced, the computer uses replacement data that it has identified in advance. This will be explained with FIG. 5, with an example for attributes that is detected to be common to multiple computers.

As common attributes would not much contribute to uniqueness (e.g., many users prefer English), most of the common attributes would be of U = LOW types.

FIG. 3A also illustrates attribute diagram 301 with modifying activities (arrows between the quadrants or within quadrants) that depends on the weights and that may change the weights. To introduce the activities, the weights (W)i are again being illustrated by binary scores, HIGH or LOW. The skilled person can use weights with more detailed granularity (such as percentages), as explained above.

In order to make fingerprinting more difficult, attributes to go to server computer 102 (as part of attribute set [A]_MOD) should be in (W)i = (LOW, HIGH) whenever possible.

As both contributions are contradicting, the modifications can only be compromises.

Type (1) attributes can be down-weighted from (W)(1) to (W) = (LOW, ...] by modifying as REPLACE. In this case, the attribute value V changes. For example, some fonts can be removed from a font list (the font can stay, but the identification of that font would be taken out from the list). A particular attribute (such as A1, font list) would turn into an attribute of type (3), but would stay an attribute with a font list.

Type (2) attributes are relevant for the function so that it would have to remain (KEEP). However, to make it more difficult to use that information to identify the client computer, further information can be added (cf. the camouflaging). The original type (2) attribute as well as an added attribute (or added values, symbolized as PLUS) would change the weight. The further information may lower U. It is also possible to divide out information of type (2) attributes to different data carriers (cf. the analogy to channel hopping in radio communication).

Type (3) attributes can be camouflaged by further, different attributes (or by adding values, PLUS), such as by adding languages. The server computer would transmit data in further languages, and the client computer can ignore some of that.

Type (4) attributes can stay unchanged (KEEP) so that they will the transmitted to server computer 102. Type (4) attributes can also be canceled (MINUS) so that they are not transmitted.

Replacement data (or added) data should be of types (3) and (4). In other words, the suitability for fingerprinting is scored at U = LOW. Using alternative data collected from peer group 100', for example, in [A]_PEER is possible.

Modifications [A] to [A]_MOD require the knowledge of attributes with weights that are appropriate. Using the common attributes (e.g., obtained from PEER) is one option. The description turns to that next.

FIG. 3B illustrates two-dimensional attribute diagram 302 for attributes, and also symbolizes value statistics. For simplicity of explanation, the diagram is limited to the two attributes CANVAS and TIME_ZONE.

The skilled person is familiar with the canvas element in HTML (version 5) that can be used for rendering shapes and bitmap images on computers. However, during the last decade, the canvas element had acquired public attention due because it can be used to identify users (and/or computers). Details had been published, for example, in the mentioned paper by Gunes Acar. The skilled person knows that approach as "canvas fingerprinting".

Much simplified and using the above-introduced terminology, the server computer causes the client computer to generate a relatively small image or the like, and the client computer returns a hash value for that image, for example, CANVAS = /3/. That is simplified, the value V would not be "3" but would be a numeric value with more digits. In of the above contribution classes, CANVAS has the "extremely high contribution to U", in view of the scores CANVAS belongs to U = HIGH.

As CANVAS does not matter for certain functions (e.g., to display text), the contribution weight F would be relatively small (e.g. F = LOW).

By monitoring communications, a computer (e.g., gateway computer 104 in FIG. 5) can establish statistics, here simplified CANVAS = /1/, CANVAS = /2/, CANVAS = /3/ are values that occur with relatively low probability (thin line), and the CANVAS = /4/ occurs with higher probability (bold line). For the modifying step, CANVAS = /4/ is therefore a suitable replacement value.

For the TIME_ZONE attribute, the statistics may show relatively high occurrences with values /UTC+1/ (bold line), but relatively low occurrence in /UTC-2/ (thin line). The values with higher occurrence are suitable replacement values.

### Two concepts or approaches to implement information modification

FIGS. 4A and 4B illustrate the communication between client computer 101-c and server computer 102, with information modification by gateway computer 103/104.

Gateway computer 103/104 can have two modules, that are gateway module 103 and gateway module 104. The differentiation into modules is convenient for explanation to differentiate approaches, and it is - in principle - possible to implement gateway computer 103/104 with either gateway module 103 or gateway module 104 only.

The description also refers back to FIG. 1 and introduces two approaches. The approaches are related but can be implemented independently from each other. FIG. 4A differentiates the approaches above and below a dashed-point line, and FIG. 4B shows how both approaches can be combined.

The first approach is implemented by gateway module 103 in the communication link between client computer 101-c and server computer 102. Gateway module 103 evaluates REQ_TO_SERVER (that comprises attribute statement [A]) to assign weights (W) and modifies attribute statement [A] to modified attribute statement [A]_MOD. Gateway module 103 forwards [A]_MOD in REQ_TO_SERVER_MOD, and server computer 102 receives REQ_TO_SERVER_MOD. FIG. 4A shows that modification at time-point t1.

The first approach can also be applied to RESPONSE_TO_SERVER likewise (cf. t4, RESPONSE_TO_SERVER_MOD, here shown as performed by gateway computer 104.

The second approach is implemented by gateway computer 104 that intercepts REQ_TO_CLIENT (from server computer 102). In the second approach, the gateway computer intercepts the REQ_TO_CLIENT with the DEMAND_FOR_[A]. By that request, server computer 102 may request client computer 101-c to provide information, such an attribute statement [A]. A technical implementation of the demand can be code to be executed by client computer 101-c. Gateway computer 104 evaluates the demand (e.g., by parsing the code) and thereby assigns the weights (W) to the information that is requested by the code).

Depending on the assignments, gateway computer 104 modifies the attribute statement [A]. For that step, gateway computer 104 has two alternatives:

In the first alternative (here at t3), gateway computer 104 can modify the demand so that DEMAND_FOR_[A] turns into DEMAND_FOR_[A]_MOD. As the demand belongs to the request (i.e., REQ_TO_CLIENT), the request is being modified as well (to REQ_TO_CLIENT_MOD). As a consequence, client computer 101-c responds to the request with a different attribute set (with [A]_MOD), following a modified demand.

In the second alternative, gateway computer 104 can performs at least some of the code and sends a RESPONSE_TO_SERVER_MOD. Gateway computer 104 would return [A]_MOD with attributes that do not correspond to originally demanded attributes.

For both approaches (the second approach in both alternatives), the modified attribute statement [A]_MOD that gateway computer 103/104 sends to server computer 102 (and that server computer 102 receives) appears like a "fake". As explained above, [A]_MOD has different weights (for individual attributes Ai or for attribute groups α) so that the abilities of server computer 102 change. For example, finger-printing is made more difficult, but server computer 102 can still performing the function (to provide a response that fits).

### Code implementation

In implementations, the code (second approach) can be script code (in JavaScript, application programming interface API). For some data, the code may cause the code-performing computer (i.e., client computer 101-c or gateway computer 104) to obtain hash values.

For example, a RESPONSE_TO_SERVER_MOD can comprise a common hash value (that has been identified in advance by applying statistics etc., cf. FIG. 5, module 120). The hash value in the response does not have to be the correct hash value (e.g., of the attribute FONT_LIST over all values). But the replacement value would have a score at U = LOW. It may be called a "fake hash", cf. FIG. 3B with CANVAS = /4/.

### Combination of both approaches

FIG. 4B repeats most parts of FIG. 4A, but there the communication at t2 is missing. Gateway module 103 operates as described (i.e., modifies REQ_TO_SERVER to REQ_TO_SERVER_MOD), but instead of responding, server computer 102 may raise the demand (DEMAND_FOR_[A] in REQ_TO_CLIENT, at t3).

Such a situation can typically arise, for example, in the following: Gateway computer 103/104 has operated in the first approach (module 103). Server computer 102 may have received [A]_MOD (at t1) and - optionally - may have evaluated [A]_MOD. Consequently, some attributes (with values) might be missing at server computer 102. But server computer 102 can ask for that, technically be including the missing attribute into attribute statement [A] that belongs to the demand, cf. t3. In other words, server computer 102 follows up for attributes that are missing (from the server perspective).

Gateway 104 now operates in the second approach (as described) for FIG. 4A. As a consequence, client computer 101-c may provide a modified attribute statement [A]_MOD because the code has changed (first alternative), or gateway computer 104 may have provided a modified attribute statement [A]_MOD (second alternative).

### Replacement data and other modifying data

The description has explained that the attribute statement [A] can be modified (to [A]_MOD with (W)_MOD, FIGS. 2, 3A, 3B), and has explained modalities in two approaches (FIGS. 4A, 4B).

As already mentioned with FIG. 2 and partly with FIG. 3B, gateway computer 103/104 needs alternative data (cf. FIG. 2, REPLACE, PLUS). The description turns to that next.

Simplified, to downscale attributes and/or to downscale their values (e.g., from U = HIGH to U_LOW), uniqueness is to be decreased (to make fingerprinting more difficult). In the following, the description explains the collection of common attributes (or common values) that can be used as replacements (or additional data). Due to the commonness, fingerprinting is made more difficult.

The description therefore changes its point of view by providing further details for the client computers in peer group 100' (i.e., excluding client computer 101-c).

FIG. 5 illustrates multiple client computers 101-k' (k' = 1 to K'), server computer 102, and two auxiliary computer modules 110 and 120 that can be used to provide alternative data to implement modifying (first and second approaches). Computer modules 110 and 120 can be implemented within the gateway computers, or can be implemented separately from the gateway computers.

Server computer 102 does not have to be the same server computer the communicates with client computer 101-c (cf. FIG. 1), but can be a different computer in similar function.

Modules 110 and 120 can apply statistics and can collect and process feedback (from client computers), the following description refers to examples.

Module 110 is an attribute monitor that monitors REQ_TO_SERVER that client computers 101-k' (i.e., of the peer group) send to server computer 102. As already explained in detail above, REQ_TO_SERVER comprises attribute statements [A]. Over time, module 110 provide statistics for attributes A with values V. Module 110 does not have to assign weights, but it identifies the occurrence frequency (for A and V). In other words, module 110 can provide histogram information (cf. FIG. 3B the attributes in bold with higher occurrence).

For example, module 110 identifies that the attribute LANGUAGE has it most common in the value /English/, that the /German/ is most often available form client computers 101-k that are located in Central European Time zone etc., because the TIME_ZONE = /UTC+1/. In that sense, module 110 identifies common (A x V) combinations that - due to their occurrence - are not suitable to fingerprinting (i.e., U for that attribute combination would be LOW).

Module 110 thereby provides alternative data (cf. [A]_PEER in FIG. 2) to obtain modifications in the attributes (in REQ_TO_SERVER_ MOD, or RESPONSE_TO_SERVER_MOD). In other words, module 110 provides attributes (with value) that can be used in the modifying step so that U goes, for example, from U = HIGH to U = LOW (down-scoring).

Module 110 can also provide reference data, cf. [A]_REF in FIG. 2.

Module 120 is a demand monitor that monitors REQ_TO_CLIENT (with the DEMAND_FOR_[A]), and RESPONSE_TO_SERVER. For example, module 120 identifies code (from server computer 102) that would cause client computers to disclose attributes (cf. FIG. 4A, 4B at t3). Based on the responses, module 120 can also identify common answers (i.e., attributes that are provided in the majority of the responses, but that would have U_LOW).

As mentioned, for some attributes, the code causes the client computers to generate hash values. For example, a particular font list would lead to a particular hash value. In other words, the attribute values can be available as hash values. (Hash value do not allow to trace what fonts are installed, but for the U criterium, hash values are U = HIGH.)

Based on the statistics, module 120 can identify common attributes as well (that would be U = LOW), among them common hash values (for the font list attribute) that would be U = LOW.

Therefore, modules 110 and 120 provide data that can be used a replacement data (REPLACE), as additional data (PLUS) and so on, usually in the U = LOW contribution.

FIG. 5 shows modules 110 and 120 separately, but the skilled person can combine the functions into a single module.

### Combination of both approaches in an example

The description now explains a scenario in that both approaches are applied. It is however noted that the description merely provides an example, and that the approaches can be implemented independently from each other.

The description takes this example as an opportunity to show that there are more attributes (in attribute sets) that could be communicated, but that the communication is limited to attribute statements with relatively low uniqueness contribution U.

For this example, the following is assumed: Client computer 101-c has a browser to process web pages in HTML DOM structures. The web pages may contain embedded code in JavaScript. (In other words, the demand is coded in JavaScript).

The browser is "JavaScript enabled" to execute such code (for the code modules are called "objects"). As a side-note, JavaScript enabled or disabled, is an attribute JAVA or JAVA-ENABLED with a binary value (enabled/disabled, enabled=true or false, etc.). In the browser, an object, the so-called "window object" allows loading a web page (as part of a TO_CLIENT communication, cf. FIG. 1) into a browser tab, allows manipulate the pages (if loaded into that window), allows to store data specific to that page (storing by client computer 101-c, for example using a local database or other storage mechanism), and allows many more user-computer interactions. It is also possible that the browser identifies window attributes (with particular values for Window.innerWidth and Window.innerHeight, being attributes with particular numerical values). This is also an example for the above-mentioned features that allow displaying images on the client computer.

In the browser, the so-called "navigator object" has access to the user-identifying data (i.e., access to most of the attribute set 101-c, cf. FIG. 6). The "navigator object" further allows to retrieve attributes things like the user's preferred language (e.g., /German/, allows to collect a media stream from a webcam of client computer 101-c.

The data that the "navigator object" can identify is most commonly used in building the web fingerprint of the user. In other words, the data can serve as attributes A that can be communicated (in attribute statements [A] to other computers).

There should be the goal to prevent fingerprinting (or at least to make it more complicated and computation intensive). The approach to reach that goal is to replace these characteristics with common values (cf. FIG. 2 REPLACE by [A]_PEER), by gateway computer 104.

Client computer 101-c and server computer 102 have already communicated, for example, with REQ_TO_SERVER and RESPONSE_TO_CLIENT.
Server computer 102 (cf. FIGS. 1 and 3A, 3B) sends REQ_TO_CLIENT (with the demand coded in JavaScript)

Gateway computer 104 intercepts REQ_TO_CLIENT (so that it does not reach client computer 101).

Gateway computer 104 evaluates the REQ_TO_CLIENT and comes to the following results:
- REQ_TO_CLIENT is a page to be displayed by the browser in client computer 101. The pages comprise code (in JavaScript).
- In steps weighting and assigning, gateway computer 104 differentiates the received code into
   a first subset (i) of the code would trigger the client computer to return an attribute statement [A](i) with F = LOW ("not particular useful")
   a second subset (ii) of the code would trigger the client computer to return an attribute statement [A](ii) with U = HIGH ("impactful elements").

According to pre-defined rules, gateway computer 104 selects the second subset (ii) of the code for action, but ignores the first subset (i). In other words, this is an example, for the application of change rules [C].

For the first subset, gateway computer 104 modifies the JavaScript code by injecting code, which overrides how the navigator object returns data (to the server computer) and what that data is.

For example, the following replacements (cf. REPLACE in FIG. 2) are applied for attributes A1, A2, A3 and so on:
- A1: userAgent = 'Mozilla/5.0 (Windows NT 10.0; Win64; x64; rv:135.0) Gecko/20100101 Firefox/125.0)'
- A2: ACCEPT=text/html,application/xhtml+xml,application/xml;q=0.9,*/*;q=0.8
- A3: CONTENT-ENCODING=gzip, deflate, br, zstd
- A4: Content-language=en-US,en; q=0.5
- A5: Upgrade Insecure Requests=1
- A6: Referrer= https://...com/
- A7: DO-NOT-TRACK = 1
- A8: platform = 'Windows'
- A9: language = 'en-US'
- A10: languages = 'en-US'
- A11: user_Language = 'en-US'
- A12: device-Memory = '8192 MB'
- A13: hardware-Concurrency = 4
- A14: Media-Devices = ... (undefined attribute, no value)
- A15: permissions = ... (undefined attribute, no value)
- A16: plugins = ... (undefined attribute, no value)
- A17: Java-Enabled = false

By convention, the attributes are given in uppercase letters.

Gateway computer 104 communicates REQ_TO_CLIENT_MOD (cf. FIGS. 4A, 4B) to client computer 101-c, with an (original) first sub-set and a (modified) second sub-set.

When executing the code for the second sub-set, the browser changes some settings. In reality, the browser remains java-Enabled = true (because it still has to execute the code, such as the first sub-set of the code). However, in case the code demands an attribute statement [A] to be transmitted to the server computer, the browser would provide an attribute statement [A] from A1 the agent attribute with value "...Safari/537.36" to the agent attribute A12 with value "enabled".

These attributes that are given here (A1 to A17) have values that are common to client computers, therefore the attributes would be U = LOW (for A1 to A17).

In reality, the agent attribute might be "537.30" and the device memory attribute may show less memory (i.e., a different value combination leading to a combined of an attribute group α with AGENT and MEMORY with U = HIGH contribution), but the modification down-scored the attribute combination (e.g., to U = LOW).

FIG. 6 illustrates a flow-chart diagram of computer-implemented method 400 to operate gateway computer 103/104, and also illustrates steps 510/520 to obtain attribute changes rules [C].

As illustrated on the left side by steps, there are two activities that are performed advance: In step 510, collecting attributes from the plurality of client computers (as reference or peer data) and in step 520, identifying attribute change rules [C]. The activities can involve operating attribute monitor 110 and demand monitor 120 (cf. FIG. 5), with collecting feedback and/or statistics (cf. FIG. 2).

The right side of the figure illustrates computer-implemented method 400 to operate gateway computer 103/104 that participates in the communication between particular client computer 101-c and server computer 102, over communication channel 105. As already explained, particular client computer 101-c belongs to plurality 100 of client computers 101-1, 101-k, 101-K, cf. FIG. 1.

Gateway computer 103/104 intercepts (step 410) the communication between particular client computer 101-c and server computer 102. Intercepting is performed to the communication in communication channel 105. By intercepting, gateway computer 103/104 identifies (step 420) attribute statement [A] that particular client computer 101-c either actively forwards (cf. REQ_TO_SERVER) to communication channel 105 or that server computer 102 demands (cf. REQ with DEMAND_FOR_[A]) from particular client computer 101-c to be forwarded to communication channel 105.

In general, communication channels are designed to communicate data unchanged but herein, the gateway computer intercepts the communication: data that is forwarded to communication channel 105 (i.e., REQ) is not necessarily communicated unchanged, but with changes (i.e., MOD).

Based on the identified attribute statement [A], gateway computer 103/104 is assigning (step 430) contribution weights (W) to one or more attributes in the identified attribute statement [A]. The contribution weights (W)i are data items that individually (for each i separately) represent the extent by that a particular attribute Ai contributes both to the ability of server computer 102 to identify particular client computer 101-c (the uniqueness weight (U, Ui), and to the ability of server computer 102 to provide a response that fits to a request of particular client computer 101- (the function weight (F, Fi).

Server computer 102 is able to identify particular client computer 101-c and/or to provide the response under the condition that server computer 102 obtains knowledge of the one or more attributes, in statement [A].

Based on the assigned contribution weights (W)i, gateway computer 103/104 modifies (step 440) attribute statement [A] to a modified attribute statement [A]_MOD. In [A]_MOD, the weights are different (W)_MOD. The ability of server computer 102 to identify particular client computer 101-c is being reduced, while the ability to provide the response that fits to a request of the client computer 101 is maintained.

The ability of server computer 102 to identify the particular client computer 101-c can comprise the ability to perform fingerprinting.

The ability of server computer 102 to identify particular client computer 101-c can comprise the ability to identify the hardware of particular client computer 101-c or to identify the user of that particular client computer 101-c.

In step modifying 440, gateway computer 103/104 can modify attribute statement [A] to modified attribute statement [A]_MOD] by applying attribute change rules [C] that have been obtained by applying statistics to attributes [A]_PEER in communications with client computers 101-k' that belong to peer group 100' (i.e., peer attributes).

In step continuing the communication 450, data in the communication channel 105 that is directed to server computer 102 is data that has been modified. Gateway computer 103/104 can forward the modified attribute statement [A]_MOD] to communication channel 105. Consequently, the REQ_TO_SERVER would arrive at server computer 102 as REQ_TO_SERVER_MOD (first approach), the REQ_TO_CLIENT with DEMAND_FOR_[A] would arrive at client computer 101-c as REQ_TO_CLIENT_MOD with DEMAND_FOR_[A]_MOD (second approach, first alternative). Continuing 450 can also comprise sending RESPONSE_TO_SERVER_MOD (cf. the second approach, second alternative).

The attribute change rules [C] can cause gateway computer 103/104 to modify the attribute statement [A] by replacing REPLACE one or more values Vij of an attribute Ai with one or more alternative values Vij_ALT (obtained from REF, from PEER or otherwise), removing MINUS an attribute Ai from attribute statement [A], removing MINUS one or more values Vij from the attribute Ai so that it turns into a non-defined attribute, or by adding PLUS a further attribute to the attribute statement [A].

Attribute change rules ([C]) can have been obtained by applying statistics to peer attribute statements [A]_PEER with applying statistics that process contribution weights of the peer attributes (W)_PEER. Optionally, attribute change rules [C] prefer attribute values with relatively high occurrence in the peer attribute statements [A]_PEER in the peer group (100').

The contribution weights (W)_PEER of the peer attributes [A]_PEER may have been processed such that the modified attribute statement [A]_MOD comprises alternative values Vij_ALT that cause their attributes to have contribution weights (W) with relatively low uniqueness weight U but with relative high function weights F.

For the above-mentioned first approach, gateway module 103 performs identifying 420 attribute statement ([A]) by intercepting a request REQ_TO_SERVER that particular client computer 101-c actively forwards to communication channel 105, and performs step modifying 440 by changing some of the attributes, and by forwarding a modified request REQ_TO_SERVER_MOD to server computer 102.

For the above-mentioned second approach, gateway module 104 performs step identifying 420 attribute statement [A] by intercepting a request that the server computer 102 forwards to communication channel 105. Gateway module 104 intercept a request REQ_TO_CLIENT that comprises a demand DEMAND_FOR_[A] that the particular client computer 101-c forwards a demanded attribute statement and performs step modifying 440 by changing the demand so that the demanded attribute statement points to alternative attributes. However, due to modifying in step 440, the demanded attribute statement does not reach server computer 102.

Gateway module 104 performs step modifying 440 by changing a demand that comprises code to be executed, wherein changing comprises: sending a response to server computer 102 by responding with alternative attributes, or forwarding a modified demand to particular client computer 101-c such that the demand points to alternative attributes.

Gateway computer 103/104 can intercept (step 410) the communication to identify an attribute statement [A]) with attributes that for the particular client computer characterizes at least one of: a user agent; a list of installed plugins; a language in that the first request indicates a content language in the response; the fonts that are installed; the size of the RAM memory; an indication if the execution of scripts is enabled; a screen size; a time zone; and/or an operating system being executed by the particular client computer. The description had provided further examples.

### Introduction to further aspects

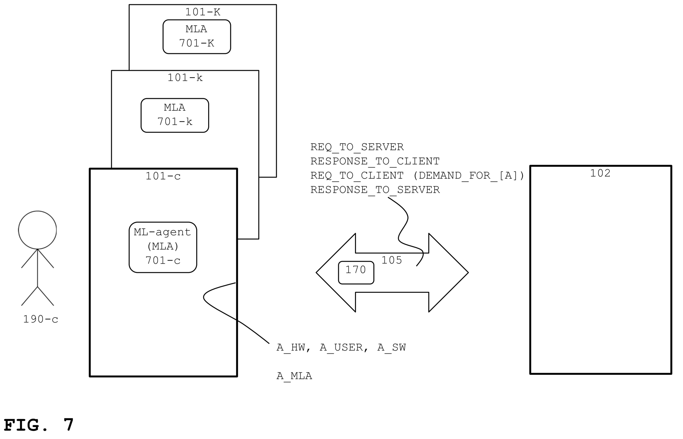

FIG. 7 illustrates the bi-directional communication between client computer 101-c and server computer 102. Client computer 101-c belongs to the plurality of client computers 101-k, from k = 1 to K. The plurality is differentiated into client computer 101-c (that is a particular client computer) and the client computers of peer group 100' (as introduced with FIG. 1, peer group 100' is defined without computer 101-c). In that sense, FIG. 7 is just a repetition of FIG. 1. The bi-directional communication goes over communication channel 105, with REQ_TO_SERVER, RESPONSE_TO_CLIENT, REQ_TO_CLIENT (DEMAND_FOR_[A]), and RESPONSE_TO_SERVER as explained above. Details are therefore omitted.

But FIG. 7 illustrates more: client computers 101-k (k = 1 to K) run machine-learning agents 701-k (k = 1 to K). The description also applies the acronym "MLA" (in singular) and MLAs (in plural). Particular client computer 101-c runs particular MLA 701-c. The illustration is simplified and the figures shows one MLA per client computer. It is also contemplated to define the set of MLAs differently (not for a number of K MLAs, but for more than K) because there could be more than one MLA per client computer.

FIG. 7 also illustrates attribute identifier 170 (or "extractor") that can be used optionally for attributes in relation to the MLAs.

FIG. 7 further illustrates users, here symbolized by user 190-c at client-computer 101-c (other users are not illustrated, just to keep the figure simple). There is a further simplification: there could be one user per client computer, or two or more users could alternatively operate a client computer (in time-sharing setting). But it should be noted that the users are not required here.

Illustrating MLAs and users is convenient to show that method 400 can be applied as well because - metaphorically - the MLAs alone, the users alone or the users together with their MLAs can be associated with "fingerprints" as well.

As explained above, computer-implemented method 400 is a method to operate gateway computer 103/104 (cf. FIGS. 4A, 4B) that participates in the communication between particular client computer 101-c - that belongs to a plurality 100 of client computers 101-1, 101-k, 101-K - and server computer 102, over communication channel 105.

But there is a further aspect: the client computers run MLAs 701-k, 701-K, also 701-c for a particular MLA, k= 1 to K). Optionally, the MLAs act on behalf of the users (there is no user present during communication) or act in teams (i.e., user with MLA).

In other words, the MLA are being executed on the client computers. It does not matter if an MLA is being executed as a component of a browser (i.e., a browser add-on), being executed with a run-time environment (cf. the above explanations regarding JavaScript), being executed above the operation system of the client computer, or otherwise.

Method 400 is being executed as described with FIG. 6 with the following observations: Step 410 "intercepting communication" can comprise to extract attributes from messages (or queries to the server, etc.). Step 420 "identifying attribute statements [A]" can comprise to identify MLA attributes A_MLA. Step 430 "assigning contribution weights (W)" remains unchanged. Step 440 "modifying ..." can comprise to modify messages (between computers). Step 450 "continuing communication" remains.

Processing attributes follows the steps of method 400. As mentioned above, server computer 102 can use attributes to distinguish particular client computer 101-c (by "fingerprinting") from other client computers (i.e., in peer group 100'), and attributes A can contribute to uniqueness (of particular client computer 101-c).

As mentioned above as well, the ability of server computer 102 to identify particular client computer 101-c comprises to identify the hardware of that particular client computer 101-c or to identify the user of that particular client computer 101-c. The description has also explained attributes that are related to the software that that runs on the client computers (browsers, runtime-environments etc., on the client computer).

Further, as server computer 102 can use attributes A to tailor the response (to the client computers), the attributes A can contribute to the function (for example, by the server computer transmitting particular data to particular client computers).

It is convenient to summarize these above-explained aspects by the following:
- In general, the client computers would be unique. In other words, all the client computers in a peer group are different from each other. Attribute statement [A] reaches communication channel 105 (by the client computer actively forwarding, or by the client computer being instructed "demanded" from the server computer). Attribute statement [A] comprises the data that the server computer needs to distinguish the individual client computers (i.e., to recognize their uniqueness).
- More in detail, uniqueness can be based on differences in the hardware (of the client computers). In this case, it does not matter who the user is. Attribute statement [A] comprise data that are related to the hardware of client computer. The attributes A can be called "hardware attributes" or A_HW. Examples comprise attributes that are related to memory, that are related to a user interface (screen size), and so on.
- More in particular, uniqueness can be based on the user of that particular client computer 101-c. Attribute statement [A] comprise data that is related to the user of client computer. The attributes A can be called "user attributes" or A_USER. Examples comprise the attributes LANGUAGE etc. As explained above, LANGUAGE may not be sufficient to identify a particular user, but attributes are evaluated in combination.
- More in particular, uniqueness can be based on difference in the software that is installed on the client computer. The attributes A can be called "software attributes" or A_SW. Examples comprise the attributes platform, FONT_LIST and others.
- Uniqueness can be based on differences that are outside the hardware, user and software categories. Examples comprise the attribute TIME_ZONE. Likewise, TIME_ZONE would be one attribute of many others.

A combination of a particular hardware (of the client computer) and a particular user (of the particular client computer) is therefore also identifiable, provided that attribute statement [A] comprises A_HW and A_USER. The same principle applies to combinations of a particular hardware and particular software (A_HW, A_SW), combinations of a particular user and particular software (A_USER, A_SW), and so on.

From a different granularity perspective, the description has already applied the concept to have entities: For example, the entity can be a particular client computer or can be a particular internet browser that runs on the client computer (device fingerprinting, i.e., hardware fingerprinting), or the entity can be a particular user of that computer (user fingerprinting).

In general, the client computers would remain unique. But uniqueness can be based on further differences. The above-mentioned categories (such as hardware, user, software etc.) may not be sufficient, the description turns to that aspect next.

### Further differentiators

While the functional distinction into "client computers" (that request information) and "server computers" (that provide requested information) remains, a higher level perspective leads to computer networks in a computer can be a client computers only (request information), can be a server computers only (provide information), or a computer may even have both client and server functionality (request and provide information).

The perspective is much similar in looking at a group of humans: some of them only request information, some of them only provide information, and some of them do both. (The terms "client" and "server" are less appropriate to use.). It should be noted that humans consider the uniqueness of individual persons and that may lead to situations in that a response (i.e., a human that provides information) is tailored to the person who asks. Just to take a simple example, person A asks person B, and person B may answer in a style that would be appropriate to A. But B may completely ignore the question from A.

With the development of artificial intelligence (AI), it can be expected that so-called (digital) agents act as the primary intermediaries for digital discourse. In general, such agents would be implemented by computer-programs and the programs would have been obtained at least partially by machine-learning. More in detail, such machine-learning agents (i.e., the MLAs in FIG. 7) would be implemented by machine-learning (ML) tools that had been trained (or that are being trained) with data from humans. The ML-tool (at least that at the client computer) can be a trained agent (such as a large language model LLM).

It is also possible that the interaction between computers can be autonomous agentic frameworks where personal AI agents can act on behalf of a person.

MLA 701-c, MLA 701-k etc. have already been mentioned. In other words, the "client computer" remains the computer that requests information, and the "server computer" remains the computer that provides the requested information, even if one of the computers is operated - at least partially - by a non-human entity (such as by an MLA). The non-human entity can act on behalf of a human user. (It is also possible that the server computer uses a non-human entity as well.)

To stay with the above example, a human user (such as for example user 190-c) may instruct the non-human entity (i.e., the agent that is a computer program at the client computer, here MLA 701-c) to obtain travel information for a particular city (the user's request: "I need to travel to .... very urgently"). The agent (e.g., MLA 701-c) may have learned that computer process travel information in the form of data regarding, for example, the arrival and departure days, the booking of accommodation, the identification of suitable transportation (air, train etc.), weather forecast etc. Therefore, the MLA would expand the user's request to a more detailed collection of topics (to be included in the REQ_TO_SERVER, cf. FIG. 1). For example, the MLA would select a particular date in the calendar, would book accommodation according to pre-defined settings, would engage in the process to study transportation schedules, would create a back-up plan for interruptions to be expected and so on. In case of an MLA being an LLM, the REQ_TO_SERVER may comprise statements or messages in natural language. The skilled person is familiar with input to LLMs being called "prompts", so that REQ_TO_SERVER can be a prompt (that is directed to server computer 102 that could use an LLM as well).

However, it can happen that such agents (being non-human entities) are trained differently, a first non-human entity (i.e., the MLA being an LLM) may use the term "trip", a second non-human entity (i.e., the MLA being an LLM as well) may use the term "journey".

Just by way of example, MLA 701-c should use the term "trip". For the server computer such differences do not matter, it can still provide the requested data. But the above-mentioned "fingerprint" metaphor can be understood for uniqueness of information that can be related to a particular entity, in this case to the non-human entity. In other words, MLAs may use linguistic patterns that are unique. It is also possible to use the term "semantic fingerprint", and the characteristics not only comprise idiosyncratic vocabulary, but further speed, dialects and others.

When the communication (via communication channel 105) reaches server computer 102, server computer 102 has to remain able to provide the response that fits to a request of MLA 701-c. In other words, MLA 701-c provides so-called grounding to its counterpart (i.e., the programs at server computer 102 that process REQ_TO_SERVER). In other words, the context has to be set. In the example, this context is to enable server computer 102 to process data in relation to planning a trip, but it does not matter how this context is communicated, such as by words (e.g., any of "trip", "journey", "travel") or otherwise (e.g., by data-identifiers, code-words). The ability to provide the response that fits to a request of the MLA is maintained.

In case that server computer implements a ML-tool as well, there would be two ML-tools interacting: MLA 701-c and the ML-tool at the server computer. A specific technical problem arises in such interaction, the so-called Grounding-Profiling Trap. To ensure functional accuracy (that has been labelled "F", cf. FIGS. 3A and 3B), the agent provides grounding context. However, this context inherently creates a fingerprint composed of idiosyncratic linguistic patterns, interaction latencies and other identifiers (examples below). This allows for unique profiling across discrete sessions (between both computers), even when attributes are neutralized (as explained above, modifying step, for hardware, software etc.). The herein disclosed approach solves this by decoupling grounding context from identity profiling via statistical distribution harmonization.

Using statistical data is considered to be a simple measure that does not require experts to arrange supervised training or to set up harmonization rules manually.

To summarize this topic: a particular non-human entity may have a particular non-human identity, and that identity may even be unique. Technically, the uniqueness can be evaluated by processing MLA attributes. But the ability of the server computer to provide a response remains.

It is noted that a single MLA attribute may not be sufficient to identify a particular MLA, the above-introduce attribute statement [A] with multiple attributes applies here accordingly.

### Obtaining machine-learning agent (MLA) attributes

An MLA can provide agent attributes A_MLA. There are - in principle - two options (cf. step 420 identifying [A]):
- The MLA can provide a particular value of a particular attribute A_MLA (directly provided attributes). For example, the MLA may indicate to use terms in English.
- The MLA can provide a message that allows an auxiliary tool to extract attributes. For example, the message can have the form of a prompt with the term "journey", and the auxiliary tool can classify the message accordingly, for example, in that it uses less-frequently used terms ("journey" may have a statistically lower occurrence probability than "trip").

Such an auxiliary tool can be implemented at the gateway. FIG. 7 symbolizes this attribute detection functionality by agent attribute identifier 170. Similar auxiliary tools are shown in FIG. 8 as attribute extractors 710 and 720. The agent attributes A_MLA can be differentiated by different attribute classes:

The first attribute class can comprise the identification of the above-mentioned inguistic patterns, such as A_MLA being, for example, LINGUISTIC_PATTERN, with values such as PLAIN_LANGUAGE, SOPHISTICATED_LANGUAGE and so on. Such attributes would be identified by the auxiliary tool.

The second attribute class can comprise the identification of signs that the MLA 701-c uses in REQ_TO_SERVER. That attributes can be referred to as semiotic attributes. For example, one particular concept (e.g., a person moving between two geographical locations) can be described by different signs (e.g., "trip" in a more informal level, "journey" in a more formal level). For example, the second attribute classes can be "FORMAL" vs. "NON_FORMAL". It is also contemplated to analyze WORD_ORDER, selection of words, grammar analysis and others. Identifying signs can be implemented according to pre-defined rules. For example, messages "to plan a trip on Friday" and "on Friday to plan a trip" may have different meanings and connotations, and the rule could identify difference.

The third attribute class can comprise operation detectable parameters of MLA 701-c. An agent may have a particular interaction latency (when interacting with a user, cf. the below explanations, in a team), or the agent may have particular token frequency distributions or token number that can be identified as well. In such cases, the A_MLA can be, for example, LATENCY, TOKEN_FREQUENCY, TOKEN_NUMBER etc. To illustrate this type with more detail: in case of the MLA being a LLM, the words are represented by tokens. A greater diversity of the words may correlate to the number of token TOKEN_NUMBER. Such a diversity may not be desired - for technical reasons because the agent at the server may no be able to handle such diversity - but the TOKEN_NUMBER could be reduced (by change rules) when some (critical) words are replaced with more familiar, basic expressions (that are identified based on statistics, with higher occurrence).

The fourth attribute class can be related to the format of messages. For example, a user may identify the destination of the trip by an image (e.g., a photo of a TV-tower that is characteristic for a particular city), and the MLA may process this image further (such as to name the city).

The fifth attribute class comprises statistical data. The skilled person is able to identify statistical distances (such as between REQ_TO_SERVER from multiple agents), for example to measure the Kullback-Leibler (KL) divergence. The KL-divergence can be related to the token frequency probabilities. In a simplified example, the synonyms "trip" of "journey" may occur at different probability. The term with the lower probability has more contribution to uniqueness than the term with the higher probability.

Modifying the attributes in REQ_TO_SERVER can be summarized as harmonizing: LINGUISTIC_PATTERN can be changed, the formal level can be changed, latencies can not be avoided, but extra delay can be introduced, or elements in the request or message (such as terms) can be selected according to the KL divergence.

The above-explained attribute types (in the diagrams of FIGS. 3A and 3B) apply as well.

It is noted that the attributes are message-agnostic in the sense that the content of message (from the MLA to the server computer and/or the agent at the server) remains substantially unchanged. The attributes remain technical datasets that represent properties of the MLA. The attribute classes can be applied in combination.

It is however noted that MLA attributes can depend on the training by that the MLA has been trained earlier.

The above-identified concept to use attribute change statements [C] (in step 440) applies here as well.

For different attribute classes, identifier 170 can extract the attributes A_MLA. This function corresponds to the above-explained method steps 410 (intercepting communication) and identifying attribute statement [A], cf. FIG. 6.

Identifier 170 may have a further function: In case that the REQ_TO_CLIENT (DEMAND_FOR_[A]) comprises instructions to MLA 701-c to provide further information (e.g., instructions in the form of prompts). As explained above, server computer 102 can demand from the particular client computer that an attribute statement is to be forwarded to communication channel 105.

As already mentioned, a technical implementation of the demand can be code to be executed by client computer 101-c: for an MLA (that runs on the client computer) that would be an instruction to provide more data. As explained, gateway computer 104 evaluates the demand (e.g., by parsing the code, i.e., by parsing the instructions) and thereby assigns the weights (W) to the information that is requested by the code / instructions).

Depending on the assignments, gateway computer 104 modifies the attribute statement [A]. For that step, gateway computer 104 has two alternatives:
- In the first alternative (cf. FIG. 1, here at t3), gateway computer 104 can modify the demand so that DEMAND_FOR_[A] turns into DEMAND_FOR_[A]_MOD. As the demand belongs to the request (i.e., REQ_TO_CLIENT), the request is being modified as well (to REQ_TO_CLIENT_MOD). As a consequence, MLA 701-c in client computer 101-c responds to the request with a different attribute set (with [A]_MOD), following a modified demand. If the communication between client computer 101-c and server computer 102 is communication between ML-agents that uses terms that are similar to natural language (such as in LLM prompts), gateway computer 104 modifies the communication accordingly.
- In the second alternative, gateway computer 104 can performs at least some of the code (or rather instructions in natural language of the MLA being an LLM) and sends a RESPONSE_TO_SERVER_MOD. Gateway computer 104 would return [A]_MOD with attributes that do not correspond to originally demanded attributes. The adaptation to LLM-communication is applicable likewise.

As the REQ_TO_SERVER (that comprises the attributes) may be in the format of natural language, modifying (step 440) the attribute statement [A] to a modified attribute statement [A]_MOD may comprise to replace words (cf. FIG. 3A REPLACE from (1) to (3)). To stay with the example, a change rule (in [C], cf. FIG. 2) can comprise to replace "journey" (higher U in FIG. 3A) by "trip" (lower U). (The rule could have been obtained by applying statistics in view of peer MLAs, cf. FIG. 8). The other modification options (cf. FIG. 3A, MINUS, KEEP, PLUS) remain applicable. For example, some terms can be camouflaged by adding word (cf. PLUS).

In case of REQ_TO_SERVER or the RESPONSE_TO_SERVER is being provided (at least least partially) by MLA 301, identifier 170 can be regarded as an "artificial intelligence (AI) proxy" that act in the client-server direction. In case that RESPONSE_TO_CLIENT or REQ_TO_CLIENT would be provided by an MLA at server computer 102, identifier 170 could be regarded as an AI proxy as well.

In an alternative, the modifying step (cf. item 440 in FIG. 6) can use techniques such as prompt obfuscating, described in the following: (i) David Pape, Sina Mavali: "Prompt Obfuscation for Large Language Models". Proceedings of the 34th USENIX Security Symposium, August 13-15, 2025 Seattle, WA, USA. (ii) Caihua Li, In Gim, Lin Zhong: Confidential Prompting: Privacy-preserving LLM Inference on Cloud. arXiv:2409.19134v4. 25 August 2025.

### Teams

A human user and a non-human entity can make up a team, in the example of FIG. 7 this can be the team with user 190-c and MLA 701-c.

In case that users interact with the same MLA (such as with the same Large Language Model (LLM)) over extended periods, the user leaves behavioral tracks or traces. While such tracks my help to make the responses more accurate (such as by well-known grounding techniques), they also allow model providers (at server computer 102) to build psychological profiles of the user.

The interaction of a particular user (cf. user 190-c in FIG. 7) can interact with an MLA in a way that leaves traces. In the example of LATENCY, different users may interact with the MLA at different speed. Latency traces could be removed by harmonizing interaction times.

As mentioned in the background, fingerprinting may be applied complimentary to security implementations, but fingerprinting can not replace security implementations. But nevertheless, fingerprinting may be advantageous, for example, because the user may not have to provide log-in credentials or the like in some cases.

That observation remains applicable for MLA attributes as well. The MLA attributes can be modified with the goal to reduce the ability of server computer 102 to identify a particular machine-learning agent 701-c, but there can be a further goal to reduce the ability of server computer 102 to identify the team with agent 701-c and user 190-c. In this context it is noted that all technical options are suitable for practical application. Some options may provide an implementation to address rather non-technical problems. For example, MLA attributes may allow the server computer to differentiate the user being a child or an adult.

Not harmonizing such MLA attributes can serve as a complimentary measure to enhance security (e.g., to prevent a child in interacting with computers in certain pre-defined situations). In other words, applying the method could be contradictive to some situations (that are rather defined in non-technical terms, for example, hiding the fact that the user is a child).

In a further example, the difference between user interacting with the agent as native-speaker or non-native speaker can be harmonized so that the server computer (i.e. its agents) does not recognize differences.

FIG. 8 illustrates multiple machine-learning agents 701-1', 701-k' and 701-K' that run on the client computers, illustrates server computer 102, and auxiliary computer modules that can be used to identify attribute change statements by evaluating data from the machine-learning agents of peer group 700'. FIG. 8 is similar to FIG. 5, and the function of attribute monitor 110 and demand monitor 120 has been described with FIG. 5.

The REQ_TO_SERVER, the REQ_TO_CLIENT and the RESPONSE_TO_SERVER, can be in a format the reveals A_MLA indirectly only. Therefore, attribute extractor 710 extracts A_MLA from REQ_TO_SERVER (from agents of peer group 700') and attribute extractor 720 extracts A_MLA from REQ_TO_CLIENT going to peer group 700' and RESPONSE_TO_SERVER from peer group 700'

To stay with the above example, statistical evaluation may show that "trip" is used more frequently among the peers (in comparison to "journey"), so that an attribute change rule can be defined to replace "journey" by "trip"), at least for REQ_TO_SERVER.

A further rule can be derived to adapt responses (from the server) by replacing "trip" by "journey" for MLAs that use "trip".

In other words, in step modifying 440, gateway computer 103/104 can modify attribute statement [A] to modified attribute statement [A]_MOD] by applying attribute change rules [C] that have been obtained by applying statistics to attributes [A]_PEER in communications with client computers (101-k') that belong to a peer group (100'), peer attributes, or that have been obtained by applying statistics to attributes ([A]_PEER) in communications with ML-agents (701-k') that belong to a peer group (700'), peer MLA attributes.

### Consistency check

Executing method 400 requires gateway computer 103/104 to use resources (in terms of memory and processor load). It is possible to make the execution of resource-intensive method steps dependent on a consistency check (or validity check). For example, if a message (for that MLA attributes can be extracted) fails to comply with pre-defined standards (that are pre-defined by rules, by schemes or the like, such as, for example, checks for syntax), the message can be forwarded to server computer 102 unchanged. In that case, server computer 102 may recognize uniqueness of particular agent indeed (i.e., to identify the particular machine-learning agent). The ability to provide the response that fits to the request of the machine-learning agent would thereby be maintained even if that ability means to return an error message. In an alternative, the gateway computer may block the message (and optionally request further data).

### Preparatory steps

Applying method 400 in the context of MLAs is understood that some preparatory activities are to be adapted accordingly. For example, steps 510 "collecting attributes" and 520 "identifying attribute change rules" would have to be adapted to collect and to identify from the MLAs.

### Combination

Method 400 has been described in scenarios with the abilities of server computer 102 to identify a particular machine-learning agent 701-c or a particular client computer 101-c to be reduced (while the ability to provide the response is maintained). Both scenarios can be applied in parallel. In other words, when a client computer runs an MLA, the gateway computer can be active in view of the client computer and/or the MLA (non-exclusive logical OR).

An example for an abnormal combination of technical attributes in the resulting message is the fingerprint recognition that the client computer uses a certain browser (e.g., FIREFOX) but with a handshake pattern that is typical for a different browser (e.g. CHROME TLS).

### System and computer program

The figures also show a computer system that comprises a plurality of modules which perform the steps of computer-implemented method 400. Gateway computer 103/104 can be implemented by first gateway module 103 and by second gateway module 104, for each approach.

A computer program product that, when loaded into a memory of a computer system (e.g., gateway computer 103/104) and executed by at least one processor of the computer system, causes the computer system to perform the steps of a computer-implemented method 400.

### Discussion

As mentioned already, fingerprinting may be applied complimentary to security implementations, but fingerprinting can not replace security implementations. The described approach with method 400 to operate a gateway computer is therefore understood as a further tool to enhance security within computer networks. The ability of server computer 102 to identify a particular client computer (by inspecting hardware, software etc. attributes) is further regulated by changing its ability to identify a particular MLA (and/or user) at the client computer.

Reducing the ability of the server computer to identify a particular entity while maintaining the ability to provide the response that fits to a request of the entity, has two major aspects: (i) with the entity being characterized by hardware, software etc. of the client computer and (ii) with the entity being characterized by an MLA (running on a client computer).

Both aspects are considered to be used in parallel. It is possible to apply method 400 at the level (i) of client computers only, to apply method 400 at the level (ii) of MLAs only, or in combinations (particular client computers with particular MLAs).

### Generic computer

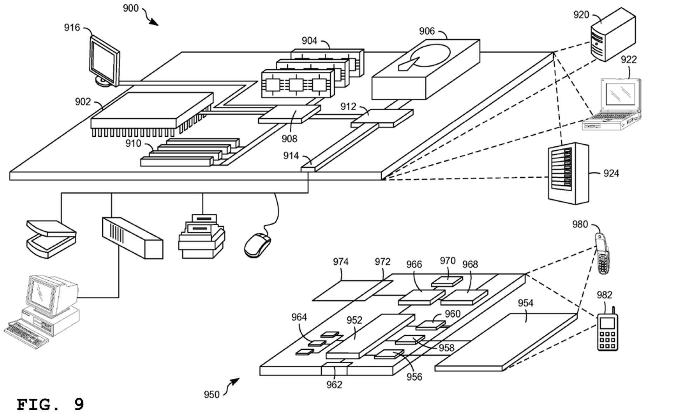

FIG. 9 illustrates an example of a generic computer device which may be used with the techniques described here. FIG. 9 is a diagram that shows an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers. Computing device 950 is intended to represent various forms of mobile devices, such as personal digital assistants, cellular telephones, smart phones, driving assistance systems or board computers of vehicles and other similar computing devices. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952 that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radiofrequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the spirit and scope of the invention.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

## Claims

1. Computer-implemented method (400) to operate a gateway computer (103/104) that participates in the communication between a particular client computer (101-c) - that belongs to a plurality (100) of client computers (101-1, 101-k, 101-K) - and a server computer (102), over a communication channel (105), wherein the client computers run machine-learning agents (701-1, 701-k, 701-K), the method (400) comprising:
the gateway computer (103/104) intercepting (410) the communication between the particular client computer (101-c) and the server computer (102), thereby identifying (420) an attribute statement ([A]) that the particular client computer (101-c) either actively forwards ([A]_REQ_TO_SERVER]) to the communication channel (105) or that the server computer (102) demands (DEMAND_FOR_[A]) from the particular client computer (101-c) to be forwarded to the communication channel (105), wherein the attribute statement ([A]) comprises attributes of the machine-learning agent (A_MLA), the MLA-attributes hereinafter;
the gateway computer (103/104) assigning (430) contribution weights ((W)i) to one or more attributes (Ai; A1, A2, A3, A4 / A5, A6) in the identified attribute statement ([A]), wherein the contribution weights ((W)i) are data items that represent the extent by that a particular MLA-attribute (Ai) contributes both
to the ability of the server computer (102) to identify the particular machine-learning agent (701-c), hereinafter the uniqueness weight (U, Ui), and
to the ability of the server computer (102) to provide a response that fits to a request of the particular machine-learning agent (701-c), hereinafter the function weight (F, Fi);
the gateway computer (103/104), based on the assigned contribution weights ((W)), modifying (440) the attribute statement ([A]) to a modified attribute statement ([A]_MOD) with different weights ([(W)]_MOD) so that in continuation of the communication, data in the communication channel (105) that is directed to the server computer (102) is modified, so that the ability of the server computer (102) to identify a particular machine-learning agent (701-c) is being reduced, while the ability to provide the response that fits to a request of the machine-learning agent (701) is maintained.

2. Method (400) according to claim 1, wherein the ability of the server computer (102) to identify the particular machine-learning agent (701-c) comprises the ability to perform fingerprinting.

3. Method (400) according to any of claims 1 or 2, wherein the ability of the server computer (102) to identify the particular machine-learning agent (701-c) comprises to identify the hardware of the particular client computer (101-c) or to identify the user of that particular client computer (101-c).

4. Method (400) according to any of claims 1 to 3, wherein in step modifying (440), the gateway computer (103/104) modifies the attribute statement ([A]) to the modified attribute statement ([A]_MOD]) by applying attribute change rules ([C]) that have been obtained by applying statistics to attributes ([A]_PEER) in communications with client computers (101-k') that belong to a peer group (100'), peer attributes hereinafter, or that have been obtained by applying statistics to attributes ([A]_PEER) in communications with machine-learning agents (701-k') that belong to a peer group (700'), peer MLA attributes hereinafter.

5. Method (400) according to claim 4, wherein the attribute change rules ([C]) cause the gateway computer (103/104) to modify the attribute statement ([A]) by replacing (REPLACE) one or more values (Vij) of an attribute [(Ai)] with one or more alternative values (Vij), removing (MINUS) an attribute (Ai) from the attribute statement ([A]), removing (MINUS) one or more values (Vij) from the attribute (Ai) so that it turns into a non-defined attribute, or by adding (PLUS) a further attribute to the attribute statement ([A]).

6. Method (400) according to claim 5, wherein the attribute change rules ([C]) have been obtained by applying statistics to peer attribute statements ([A]_peer) with applying statistics that process contribution weights of the peer MLA attributes ((W)_PEER).

7. Method (400) according to claim 6, wherein the contribution weights ((W)_PEER) of the peer attributes ([A]_PEER) have been processed such that the modified attribute statement ([A]_MOD) comprises alternative values (Vij) that cause their attributes to have contribution weights ((W)) with relatively low uniqueness weight (U) but with relatively high function weights (F).

8. Method (400) according to any of claims 1 to 7, wherein the gateway computer (103/104) is intercepting (410) the communication to identify an attribute statement ([A]) with attributes that for the particular machine-learning agent (701-c) belong to at least one of the following classes:
a first attribute class for the identification of linguistic patterns;
a second attribute class for the identification of signs that the machine-learning agent (701-c) applies;
a third attribute class with detectable parameters of the machine-learning agent (701-c) that comprises any of particular interaction latency, particular token frequency distributions, and the number of tokens;
a fourth attribute class for the format of messages; and
a fifth attribute class with statistical data, applying Kullback-Leibler (KL) divergence against a peer group of machine-learning agents.

9. Method (400) according to any of claims 1 to 8, wherein in the step modifying (440), the gateway computer (103/104) modifies the attribute statement ([A]) to a modified attribute statement ([A]_MOD) by differentiating class-specific change rules ([C]).

10. Method (400) according to any of claims 1 to 9, wherein the gateway computer (103/104) performs intercepting (410) the communication between the particular client computer (101-c) and the server computer (102) with checking a validity of the message that comprises the attribute statement ([A]), based on pre-defined rules and continues with step assigning (430) contribution weights ((W)i) to one or more attributes only if the message has been checked to be valid.

11. Method (400) according to any of claims 1 to 10, wherein the gateway computer (103/104) performs modifying (440) by modifying a demand from the server computer (102) to provide machine-learning agent attributes.

12. Method according to any of claims 1 to 11, wherein identifying (420) the attribute statement comprises to identify a semiotic property statement that characterizes a non-human identify or that characterizes the collaboration between a human and the agent, wherein the properties comprise a plurality of signs and parameters for the interaction flow via the communication channel.

13. The method according to any of claims 1 to 12, wherein the step identifying (420) an attribute statement ([A]) comprises to identify a semiotic property statement that characterizes a non-human identity or a human-agent team; wherein the semiotic property statement properties comprise a plurality of signs and detectable parameters characterizing the interaction flow, and wherein modifying the semiotic property statement comprises performing an embedding space collision by optimizing a new input vector to generate a functional output that is identical to the original intent while remaining distinct from the continuous representation of the non-human identity in the embedding space of the model.

14. A computer system comprising a plurality of modules which perform the steps of the computer-implemented method according to any of the claims 1 to 13.

15. A computer program product that, when loaded into a memory of a computer system and executed by at least one processor of the computer system, causes the computer system to perform the steps of a computer-implemented method according to any of the claims 1 to 13.
